# EUROPÄISCHE PATENTSCHRIFT

(11) **EP 2 991 045 B1**
(45) Veröffentlichungstag und Bekanntmachung des Hinweises auf die Patenterteilung: **08.12.2021**
(21) Anmeldenummer: 15153454.2
(22) Anmeldetag: 02.02.2015
(51) Int. Cl.: G07C 9/00, G07F 17/12

(54) **INTELLIGENTES ZUSTELLSYSTEM**
INTELLIGENT DELIVERY SYSTEM
SYSTÈME DE DISTRIBUTION INTELLIGENT

(30) Priorität: 12.08.2014 DE 102014111503
(43) Veröffentlichungstag der Anmeldung: 02.03.2016
(73) Patentinhaber: ParcelLock GmbH, 20148 Hamburg (DE)
(72) Erfinder: Alt, Jochen, 76307 Karlsbad (DE)
(74) Vertreter: WBH Wachenhausen Patentanwälte PartG mbB

(56) Entgegenhaltungen:
- EP-A1- 2 320 388
- WO-A1-02/095699
- WO-A1-2013/181682
- DE-A1- 10 164 574
- US-A1- 2001 045 449
- US-A1- 2002 180 582
- US-A1- 2007 247 277
- US-A1- 2009 101 711
- US-A1- 2011 041 573
- US-A1- 2013 043 973
- US-A1- 2014 068 247

## Beschreibung

### Technischer Bereich

Die vorliegende Erfindung betrifft ein intelligentes Zustellsystem sowie ein zugehöriges Verfahren. Insbesondere betrifft die vorliegende Erfindung ein Zustellsystem sowie ein zugehöriges Verfahren, bei dem die Sicherheit des Zugriffs auf ein ortsfestes Behältnis optimiert werden kann, während gleichzeitig die Handhabbarkeit von Komponenten des Systems verbessert wird.

### Hintergrund

Zustellsysteme sind im Stand der Technik bekannt, die ein Behältnis verwenden, das ortsfest ausgestaltet ist und mit einer Zustelladresse verknüpft ist. Solche Behältnisse können durch Anbieter von Zustelldienstleistungen verwendet werden, um die Zustellung von Sendungen jeder Art gesichert vorzunehmen. Dazu wird das Behältnis mit einer Sperreinrichtung versehen, die sowohl durch den Besitzer des Behältnisses als auch durch den Anbieter der Zustelldienstleistung entsperrbar ist, um Zugriff auf den Innenraum des Behältnisses zu erlangen. Während mechanische Systeme zum Gestatten des Zugriffs auf den Innenraum des Behältnisses unkomfortabel sind, sind in der Vergangenheit elektronisch unterstützte Systeme entwickelt worden, deren Anwendbarkeit gegenüber der mechanischen Lösung verbessert ist. Jedoch weisen diese Systeme zahlreiche Nachteile auf, die einerseits die Sicherheit des Zustellsystems beeinträchtigen und andererseits nur eine bedingte praktische Nutzbarkeit ermöglichen.

Die Druckschrift Wo 2013/181682 A1 betrifft ein Verfahren und eine Vorrichtung zur Steuerung eines Schließmechanismus mit einem mobilen Endgerät.

Die Druckschrift WO 02/095699 A1 beschreibt ein Verfahren und eine Vorrichtung zum Verteilen von Paketen.

Die Druckschrift US 2013/004973 A1 betrifft ein elektronisches Schloss und ein Verfahren.

Die Druckschrift US 2009/0101711 A1 betrifft das sichere Liefern von Gütern.

Die Druckschrift US 2007/0247277 A1 beschreibt ein elektronisches oder automatisches Identifikationsverfahren, um über das Internet oder ein schnurloses Kommunikationsnetzwerk aus der Ferne die Schlösser und Zugangspunkte zu einem sicheren Verteilbehälter mit mehreren Fächern zu verwalten.

Die Druckschrift EP 2 320 388 A1 betrifft ein Sicherheitssystem.

Die Druckschrift DE 101 64 574 A1 beschreibt eine Warenschleuse, ein Verfahren zum Öffnen und Schließen der Warenschleuse und eine Anordnung zur Einlagerung und/oder Übergabe einer Ware unter Verwendung der Warenschleuse sowie ein Verfahren zu deren Verwendung.

Die Druckschriften US 2002/180582 A1, US 2014/068247 A1, US 2011/041573 A1 und US 2001/045449 A1 offenbaren weitere Vorrichtungen und Verfahren nach dem Stand der Technik.

### ZUSAMMENFASSUNG DER ERFINDUNG

Es ist die Aufgabe der vorliegenden Erfindung, ein Zugriffssicherungssystem zur Verfügung zu stellen, das eine Verbesserung der Sicherheit bei der Nutzung herbeiführt und gleichzeitig eine optimierte Anwendbarkeit ermöglicht. Es ist außerdem Aufgabe der vorliegenden Erfindung, ein zugehöriges Verfahren zum Betrieb des Zugriffssicherungssystems zur Verfügung zu stellen.

Die Aufgabenstellung wird erfindungsgemäß durch ein Zugriffssicherungssystem sowie ein zugehöriges Verfahren mit den Merkmalen der unabhängigen Ansprüche gelöst. Vorteilhafte Weiterbildungen der Erfindungen sind in den abhängigen Ansprüchen definiert.

Erfindungsgemäß weist das Zugriffssicherungssystem folgende Elemente auf:
- Eine Vielzahl ortsgebundener Behältnisse, von denen jedes eine Sperreinrichtung aufweist, die selektiv zum Ermöglichen des Zugriffs auf einen Innenraum des jeweiligen Behältnisses entsperrbar ist, und wobei jedem der ortsgebundenen Behältnisse ein Behältnis-Identifikationsmerkmal zugeordnet ist;
- ein ortsgebundenes Sicherheitsmodul innerhalb des jeweiligen Behältnisses, das einen Sicherheitsschlüssel-Generator und ein Autorisierungsmodul aufweist;
- eine mobile Autorisierungsschlüssel-Zufuhreinrichtung mit einer Speichereinrichtung und einem Kommunikationsmodul zum direkten oder indirekten Zuführen eines Autorisierungsschlüssels zu dem Autorisierungsmodul;
- wobei das Autorisierungsmodul eingerichtet ist, um den von dem Sicherheitsschlüssel-Generator erzeugten Sicherheitsschlüssel mit dem von der Autorisierungsschlüssel-Zufuhreinrichtung zugeführten Autorisierungsschlüssel zu vergleichen und bei Übereinstimmung derselben ein Signal zum Entsperren der Sperreinrichtung zu erzeugen;
- ferner mit einem ortsfernen Rechnersystem, das mit einem Autorisierungsschlüssel-Generator ausgestattet ist und mit der Autorisierungsschlüssel-Zufuhreinrichtung zumindest zur Übertragung von Autorisierungsschlüsseln zu der Autorisierungsschlüssel-Zufuhreinrichtung zumindest temporär kommunikationsfähig ist.

Erfindungsgemäß ist die Autorisierungsschlüssel-Zufuhreinrichtung selektiv in einem Online-Modus, in welchem die Kommunikation zwischen der Autorisierungsschlüssel-Zufuhreinrichtung und dem ortsfernen Rechnersystem als sichergestellt angenommen wird, und einem Offline-Modus, in welchem die Kommunikation zwischen der Autorisierungsschlüssel-Zufuhreinrichtung und dem ortsfernen Rechnersystem nicht sichergestellt ist, betreibbar, wobei mit jedem Behältnis-Identifikationsmerkmal ein Kommunikationsmerkmal verknüpft ist, das selektiv den Online-Modus oder den Offline-Modus für das dem Behältnis-Identifikationsmerkmal entsprechende ortsfeste Behältnis vorgibt.

Erfindungsgemäß wird somit das Zugriffssicherungssystem mit einem Behältnis versehen, das entsperrbar ist. Im entsperrten Zustand des Behältnisses wird auf das Innere des Behältnisses Zugriff ermöglicht, so dass Sendungen in dem Behälter abgelegt werden können oder im Behälter vor dem Entsperren abgelegte Sendungen entnommen werden können. Das Zugriffssicherungssystem basiert auf einem Vergleich von Schlüsseln, wobei der Vergleich vorzugsweise in dem Autorisierungsmodul stattfindet. Dabei erzeugt das Autorisierungsmodul einen Sicherheitsschlüssel mit Hilfe eines Sicherheitsschlüssel-Generators und vergleicht diesen Sicherheitsschlüssel mit dem zugeführten Autorisierungsschlüssel. Der Autorisierungsschlüssel wird dabei am Behältnis präsentiert, insbesondere eingegeben oder anderweitig übertragen. Das Präsentieren des Autorisierungsschlüssels wird in der Regel durch den Anbieter der Zustelldienstleistungen bzw. eine vom Anbieter beauftragte Person vorgenommen. Diese befindet sich dabei vorzugsweise in der Nähe oder zumindest in der Umgebung des Behältnisses.

Hierzu wird eine Autorisierungsschlüssel-Zufuhreinrichtung verwendet, die gemäß der vorliegenden Erfindung als mobiles Gerät ausgebildet ist und von dem Anbieter der Zustelldienstleistung verwendbar ist.

Erfindungsgemäß weist die Autorisierungsschlüssel-Zufuhreinrichtung eine Option zur Kommunikation mit einem ortsfernen Rechnersystem auf. Erfindungsgemäß werden Autorisierungsschlüssel mit Hilfe eines Autorisierungsschlüssel-Generators erzeugt.

Die Erzeugung der Autorisierungsschlüssel beziehungsweise der Sicherheitsschlüssel kann in jeder Art und Weise erfolgen. Insbesondere kann eine zeitbasierte Erzeugung der Autorisierungsschlüssel und Sicherheitsschlüssel vorgenommen werden, so dass für ein Behältnis zeitlich synchronisiert mit dem Sicherheitsschlüssel-Generator und dem Autorisierungsschlüssel-Generator dieselben Schlüssel erzeugt werden, wobei der Autorisierungsschlüssel an der Autorisierungsschlüssel-Zufuhreinrichtung verfügbar gemacht wird.

Die Erzeugung der Schlüssel muss jedoch nicht zeitbasiert erfolgen, sondern kann auf jede andere Weise vorgenommen werden. Beispielsweise kann der Schlüssel auf Grundlage einer von dem Behältnis ausgegebenen, wechselnden Information, wie beispielsweise einer Ziffernfolge, auf dem ortsfernen Rechner berechnet oder identifiziert werden.

Der Autorisierungsschlüssel-Generator ist erfindungsgemäß dem ortsfernen Rechnersystem zugeordnet. Insbesondere kann der Autorisierungsschlüssel-Generator vorzugsweise als Programmmodul ausgestaltet sein, das nach Aufforderung einen oder mehrere Autorisierungsschlüssel erzeugt. Die Erzeugung der Autorisierungsschlüssel im Autorisierungsschlüssel-Generator erfolgt in der Regel in Kenntnis des spezifischen Behältnisses, so dass für jedes spezifische Behältnis ein oder mehrere Autorisierungsschlüssel von dem Autorisierungsschlüssel-Generator erzeugt werden. Der Sicherheitsschlüssel-Generator erzeugt einen Sicherheitsschlüssel, der zumindest temporär oder unter vorbestimmten Bedingungen dem erzeugten Autorisierungsschlüssel entsprechen sollte. Das System weist ferner das Autorisierungsmodul auf, das einen Vergleich zwischen Sicherheitsschlüssel und präsentiertem Autorisierungsschlüssel vornimmt. Dieser Vergleich wird eingesetzt, um zu bestimmen, ob ein Signal zum Entsperren der Sperreinrichtung erzeugt werden soll.

Kerngedanke der vorliegenden Erfindung ist es, die Erzeugung der Autorisierungsschlüssel mit dem Autorisierungsschlüssel-Generator außerhalb der Autorisierungsschlüssel-Zufuhreinrichtung vorzunehmen. In diesem Zusammenhang wird erfindungsgemäß die Autorisierungsschlüssel-Zufuhreinrichtung mit einer Funktion zur Kommunikation mit dem ortsfernen Rechnersystem ausgestattet. In diesem Zusammenhang ist erfindungsgemäß vorgesehen, dass die Autorisierungsschlüssel-Zufuhreinrichtung selektiv in einem Online-Modus oder einem Offline-Modus betreibbar ist. Dabei bedeutet der Online-Modus, dass eine Kommunikation insbesondere eine datentechnische oder anderweitige Verbindung, zwischen der Autorisierungsschlüssel-Zufuhreinrichtung und dem ortsfernen Rechnersystem sichergestellt ist oder zumindest möglich ist. Der Offline-Modus bedeutet in diesem Zusammenhang, dass eine solche Kommunikation zwischen der Autorisierungsschlüssel-Zufuhreinrichtung und dem ortsfernen Rechnersystem nicht möglich oder zumindest nicht sichergestellt ist. Ob eine Kommunikation zwischen der Autorisierungsschlüssel-Zufuhreinrichtung und dem ortsfernen Computersystem sichergestellt ist oder nicht, kann dabei aus den technischen Voraussetzungen für die Kommunikation abgeleitet werden. Die technischen Voraussetzungen können dabei die Verfügbarkeit einer Drahtlosdatenverbindung bspw. über das Mobilfunknetz umfassen, sind aber nicht darauf beschränkt.

Das System verwendet eine Vielzahl ortsgebundener Behältnisse, wobei jedem der Behältnisse ein Behältnis-Identifikationsmerkmal zugeordnet ist. Ein solches Identifikationsmerkmal kann jedweder Art sein, beispielsweise ein Barcode, eine alphanumerische Angabe oder eine kryptische Verschlüsselung, die mit einer vorbestimmten Einrichtung auslesbar ist. Die Behältnis-Identifikationsmerkmale sind vorzugsweise auf, an oder in der Nähe der Behältnisse selbst angeordnet. Das Behältnis-Identifikationsmerkmal kann mit weiteren Merkmalen des betreffenden Behältnisses kombiniert werden, insbesondere Standortmerkmale oder Ähnliches. In diesem Fall kann das Behältnis-Identifikationsmerkmal vereinfacht ausgestaltet werden und es muss die Zuordnung zwischen Behältnis-Identifikationsmerkmal und dem betreffenden Behältnis nicht eindeutig sein.

Das ortsgebundene Sicherungsmodul ist aus Sicherheitsgründen innerhalb des jeweiligen Behältnisses angeordnet, so dass bei gesperrtem Behältnis nicht autorisierter Zugriff auf das Sicherungsmodul ausgeschlossen ist. Vorzugsweise kann das Sicherungsmodul weitergehend gesichert sein, beispielsweise durch Eingießen, so dass ein Zugriff auf Bauelemente des Sicherungsmoduls zerstörungsfrei unmöglich ist.

Die mobile Autorisierungsschlüssel-Zufuhreinrichtung kann als Handheld-Gerät, also als tragbare Einheit, ausgeführt werden, das eine Eingabeschnittstelle, beispielsweise eine Tastatur, eine Ausgabeschnittstelle, beispielsweise einen Bildschirm, und andere Kommunikationsmittel aufweist, die insbesondere eine Kommunikationsschnittstelle zur Herstellung der Verbindung zu dem ortsfernen Rechnersystem. Zusätzlich können Einlesevorrichtungen vorgesehen werden, die zum Einlesen der Behältnis-Identifikationsmerkmale verwendet werden können. Ergänzend kann eine Kommunikationsschnittstelle vorgesehen werden, die für die Präsentation des Autorisierungsschlüssels zu dem Sicherungsmodul dient. Hierzu kann beispielsweise eine drahtlose Verbindung verwendet werden, die eine Kommunikation zwischen dem Sicherungsmodul und der Autorisierungsschlüssel-Zufuhreinrichtung herstellen kann. Vorzugsweise ist diese Verbindung eine Nahfeldverbindung, die ausschließlich in einem vorbestimmten Abstandbereich zwischen Autorisierungsschlüssel-Zufuhreinrichtung und Behältnis kommunikationsfähig ist.

Die Autorisierungsschlüssel-Zufuhreinrichtung weist ferner eine Speichereinrichtung auf, in der verschiedene Daten speicherbar sind.

Erfindungsgemäß werden diejenigen Autorisierungsschlüssel, die mit einem Behältnis-Identifikationsmerkmal verknüpft sind, das als Kommunikationsmerkmal den Offline-Modus vorgibt, im Voraus in der Speichereinrichtung der Autorisierungsschlüssel-Zufuhreinrichtung abgelegt und bei Eingabe des Behältnis-Identifikationsmerkmals aus der Speichereinrichtung abgerufen.

Dabei wird vorausgesetzt, dass eine Kommunikation zwischen Autorisierungsschlüssel-Zufuhreinrichtung und ortsfernem Rechnersystem insbesondere in der Umgebung des betreffenden Behältnisses nicht sichergestellt ist. Diese Information wird vorab bestimmt so dass einem Behältnis-Identifikationsmerkmal im Voraus ein Kommunikationsmerkmal zugeordnet wird, das den Offline-Modus vorgibt, wenn die Verbindung zwischen Autorisierungsschlüssel-Zufuhreinrichtung und ortsfernem Rechnersystem nicht sichergestellt ist.

Gemäß einer bevorzugten Ausführungsform der vorliegenden Erfindung werden diejenigen Autorisierungsschlüssel, die mit einem Behältnis-Identifikationsmerkmal verknüpft sind, das als Kommunikationsmerkmal den Online-Modus vorgibt, bei Eingabe des Behältnis-Identifikationsmerkmals von dem ortsfernen Rechnersystem zu der Autorisierungsschlüssel-Zufuhreinrichtung übertragen.

Somit kann das Kommunikationsmerkmal, das mit einem Behältnis-Identifikationsmerkmal verknüpft ist, entweder den Online-Modus oder den Offline-Modus vorgeben. Wenn das Kommunikationsmerkmal den Online-Modus vorgibt, bedeutet dies, dass eine Kommunikation zwischen der Autorisierungsschlüssel-Zufuhreinrichtung und dem ortsfernen Rechnersystem als sichergestellt gilt oder tatsächlich sichergestellt ist. Somit kann die Übertragung eines Autorisierungsschlüssels, der mit dem Autorisierungsschlüssel-Generator, der in dem ortsfernen Rechnersystem lokalisiert ist, erzeugt wird, zu der Autorisierungsschlüssel-Zufuhreinrichtung zugeführt werden, wenn die entsprechende Anfrage erfolgt. Diese Anfrage ist im vorliegenden Zusammenhang zumindest die Eingabe des Behältnis-Identifikationsmerkmals, so dass der Autorisierungsschlüssel-Zufuhreinrichtung einer oder mehrerer Autorisierungsschlüssel über die Kommunikation zwischen der Autorisierungsschlüssel-Zufuhreinrichtung und dem ortsfernen Rechnersystem zugeführt werden, die wiederum dem Autorisierungsmodul des Sicherungsmoduls zugeführt werden können. Wie vorstehend für den Offline-Modus beschrieben wurde, erfolgt ein Vergleich zwischen dem von dem Sicherheitsschlüssel-Generator erzeugten Sicherheitsschlüssel und dem Autorisierungsschlüssel, der auf Anfrage für die Autorisierungsschlüssel-Zufuhreinrichtung zur Verfügung gestellt wird.

Erfindungsgemäß werden somit zwei technisch vollkommen unabhängige Funktionsweisen mit dem vorliegenden System abgedeckt. Einerseits kann das Zugriffssicherungssystem mit höchster Sicherheit betrieben werden, sofern der Online-Modus verfügbar ist, da die Autorisierungsschlüssel auf dem ortsfernen Rechnersystem erzeugt werden und erst auf Anfrage für die Autorisierungsschlüssel-Zufuhreinrichtung verfügbar gemacht werden. Eine Speicherung oder anderweitiges Vorhalten derjenigen Autorisierungsschlüssel, denen der Online-Modus zugeordnet ist, muss somit nicht erfolgen. Somit wird in diesem Zusammenhang die Sicherheit erhöht, da bei Verlust oder Manipulation der Autorisierungsschlüssel-Zufuhreinrichtung kein Autorisierungsschlüssel für den nicht autorisierten Anwender zur Verfügung gestellt wird.

Um jedoch die Nutzbarkeit des Zugriffssicherungssystems auch in solchen Bereichen zu ermöglichen, in denen der Online-Modus nicht verfügbar ist, kann dennoch mit derselben einfachen Anwendbarkeit dasselbe System verwendet werden, indem die Autorisierungsschlüssel, denen der Offline-Modus zugeordnet ist, im Voraus in der Speichereinrichtung der Autorisierungsschlüssel-Zufuhreinrichtung abgelegt werden. Der grundlegende Vorteil der vorliegenden Erfindung besteht somit darin, dass die Vorteile des Online-Modus verwendet werden können, um die Sicherheit bis auf ein Maximum zu erhöhen, während dasselbe System mit einer akzeptablen Sicherheit mit annähernd unveränderter Anwendung auch im Offline-Modus verwendbar ist.

Gemäß einer weiteren bevorzugten Ausführungsform der vorliegenden Erfindung, ist für den Sicherheitsschlüssel-Generator ein Eimalschlüssel vorgebbar, wobei das Autorisierungsmodul eingerichtet ist, um den vorgegebenen Einmalschlüssel mit einem zugeführten Einmalautorisierungsschlüssel zu vergleichen und bei Übereinstimmung derselben ein Signal zum Entsperren der Sperreinrichtung zu erzeugen.

Die Eigenschaft des Einmalschlüssels grenzt sich von derjenigen des allgemeinen Autorisierungsschlüssels ab. Insbesondere ist die Sperreinrichtung vorzugsweise erst nach Entsperren der Sperreinrichtung auf die Eingabe des mit dem Einmalschlüssel übereinstimmenden Einmalautorisierungsschlüssels entsperrbar. Der Einmalschlüssel wird vorzugsweise vom Besitzer oder von anderweitigen Nutzern des Behältnisses vorgegeben und dem Anbieter der Zustelldienstleistung zugeleitet. Dabei kann der Einmalschlüssel vorzugsweise frei gewählt werden und insbesondere manuell in das Autorisierungsmodul des Sicherungsmoduls eingegeben werden. Alternativ kann der Einmalschlüssel auf Anforderung von dem Sicherungsmodul erzeugt und dem Besitzer des Behältnisses präsentiert werden. Sobald ein Einmalschlüssel vorgegeben bzw. aktiviert wurde und daraufhin oder in diesem Zusammenhang das Behältnis gesperrt wurde, wird Zugriff auf das Innere des Behältnisses nur noch durch Eingabe des Einmalschlüssels ermöglicht, da andere Schlüssel bzw. Autorisierungsschlüssel nicht zum Entsperren der Sperreinrichtung führen. Hierzu ist das Autorisierungsmodul des Sicherungsmoduls mit entsprechenden Modulen eingerichtet. Die besondere Anwendung ermöglicht es, wertvolle bzw. sensible Sendungen oder Gegenstände in dem Behältnis abzulegen und zu verhindern, dass bei Nutzung des Systems durch verschiedene Anbieter der Zustelldienstleistung Zugriff auf das Behältnis mit dem wertvollen bzw. sensiblen Inhalt gewährt wird.

Da der Einmalschlüssel dem Besitzer des Behältnisses bekannt ist, kann durch Eingeben des Einmalschlüssels in das Autorisierungsmodul des Sicherungsmoduls durch den Besitzer jederzeit Zugriff auf das Innere des Behältnisses gewährt werden. Der Einmalschlüssel, der durch die vorstehend beschriebene Vorgehensweise für den Besitzer verfügbar ist, wird vorzugsweise dem Anbieter der Zustelldienstleistung direkt oder indirekt, beispielsweise über ein Online-Portal zugeführt. Alternativ kann der Einmalschlüssel dem Anbieter der Zustelldienstleistung auch auf anderem Wege, beispielsweise telefonisch oder postalisch zugeführt werden. Nachdem der Einmalautorisierungsschlüssel, der dem Einmalschlüssel entsprechen sollte, zum Entsperren der Sperreinrichtung in das Autorisierungsmodul des Sicherungsmoduls eingegeben wurde, ist das System wieder bereit für die Nutzung anderer Autorisierungsschlüssel und insbesondere durch die parallele Nutzung durch verschiedene Anbieter der Zustelldienstleistung.

Der Einmalschlüssel kann auch mit einer beschränkten Gültigkeitsdauer versehen werden, so dass beispielsweise nach einem Tag die Gültigkeit des Einmalautorisierungsschlüssels entfällt. In diesem Fall muss entweder ein neuer Einmalautorisierungsschlüssel erzeugt oder vorgegeben oder der Vorgang abgebrochen werden.

Gemäß einer weiteren bevorzugten Ausführungsform der vorliegenden Erfindung ist für den Sicherheitsschlüssel-Generator ein Dauerschlüssel vorgebbar, wobei das Autorisierungsmodul eingerichtet ist, um den vorgegebenen Dauerschlüssel mit einem zugeführten Dauerautorisierungsschlüssel zu vergleichen, wobei bei Übereinstimmung derselben und bei Bestimmung durch das Autorisierungsmodul, dass die Sperreinrichtung nicht durch einen Einmalautorisierungsschlüssel gesperrt ist, ein Signal zum Entsperren der Sperreinrichtung erzeugt wird. Der Dauerautorisierungsschlüssel hat von dem allgemeinen Autorisierungsschlüssel abweichende Funktionen. Insbesondere wird der Dauerautorisierungsschlüssel nicht zeitbasiert erzeugt. Jedoch kann dem Dauerautorisierungsschlüssel auch eine vorbestimmte Gültigkeitsdauer vorgegeben werden, die jedoch deutlich höher als diejenige der allgemeinen Autorisierungsschlüssel ist.

Der Dauerautorisierungsschlüssel ist ferner ein statischer Schlüssel, der im Wesentlichen dauerhaft, zumindest während der eingerichteten Gültigkeitsdauer, in dem Autorisierungsmodul des Sicherungsmoduls verfügbar ist. Der Dauerautorisierungsschlüssel wird dazu verwendet, eine Option zur Verfügung zu stellen, mit der die Sperreinrichtung des Behältnisses im Wesentlichen zu jedem Zeitpunkt entsperrbar ist, indem der Dauerautorisierungsschlüssel in das Autorisierungsmodul des Sicherungsmoduls eingegeben wird und mit dem vorgegebenen oder verfügbaren Dauerschlüssel verglichen wird. Hierzu ist das Autorisierungsmodul des Sicherungsmoduls mit entsprechenden Modulen eingerichtet.

Somit kann der Zugriff auf das Behältnis anderen Personen als dem Besitzer des Behältnisses, beispielsweise Nachbarn, zur Verfügung gestellt werden, um die Annehmlichkeit der Nutzung des Systems weitergehend zu verbessern. Beschränkungen zur Nutzung des Dauerautorisierungsschlüssels können vorgesehen werden, beispielsweise zeitbasiert oder auf der Grundlage des Inhalts des Behältnisses.

Gemäß einer weiteren bevorzugten Ausführungsform der vorliegenden Erfindung ist ferner ein Modul zum Bestimmen des Beladungszustands des Behältnisses vorgesehen, wobei das Autorisierungsmodul eingerichtet ist, um einen vorgebbaren Generalautorisierungsschlüssel mit einem dem Autorisierungsmodul zugeführten Generalsicherheitsschlüssel zu vergleichen und bei Übereinstimmung desselben ein Signal zum Entsperren der Sperreinrichtung zu erzeugen, wenn das Modul zum Bestimmen des Beladungszustands bestimmt, dass das Behältnis nicht beladen ist.

Aufgrund der Verknüpfung des Systems mit einer Datenbank, die zumindest teilweise auf dem ortsfernen Rechnersystem abgelegt und bewertet werden kann, kann dem ortsfernen Rechnersystem der Beladungszustand des Behältnisses im Wesentlichen bekannt sein. Insbesondere wird dem ortsfernen Rechnersystem während der Benutzung des Zugriffssicherungssystems mitgeteilt, ob eine Sendung in dem Behältnis abgelegt wurde. Dies kann insbesondere mit Hilfe der Autorisierungsschlüssel-Zufuhreinrichtung bewerkstelligt werden, die Angaben zum Beladungszustand entweder speichert und bei Kommunikationsverbindung zu dem ortsfernen Rechnersystem diesem zuführt oder diese Angaben direkt dem ortsfernen Rechnersystem zugeführt werden. Jedoch ist es ausreichend, wenn die Information des Beladungszustands des Behältnisses für das Autorisierungsmodul verfügbar ist.

Der Generalautorisierungsschlüssel hat Eigenschaften, die sich von denjenigen des allgemeinen Autorisierungsschlüssels unterscheiden. Dem Generalautorisierungsschlüssel wird eine mittlere Gültigkeitsdauer, beispielsweise ein Tag zugeordnet. Die Sicherheit der Verwendung des Generalautorisierungsschlüssels ist daher eingeschränkt. Jedoch wird in dem Zugriffssicherungssystem vorgesehen, dass das Entsperren der Sperreinrichtung nur dann durch Eingabe eines Generalautorisierungsschlüssels, der dem Generalschlüssel entspricht, der für das Autorisierungsmodul des Sicherungsmoduls verfügbar ist, wenn das Behältnis leer ist. somit ist bei Verlust des Generalautorisierungsschlüssels selbst bzw. der Autorisierungs-Zufuhreinrichtung, in der der Generalautorisierungsschlüssel abgelegt ist, kein materieller Verlust zu erwarten.

Der Generalautorisierungsschlüssel kann gesperrt werden, beispielsweise durch die Verwendung eines Online-Portals. Hierzu muss gleichzeitig der Generalschlüssel, der für das Autorisierungsmodul des Sicherungsmoduls verfügbar ist, ebenfalls gelöscht, gesperrt oder aktualisiert werden. Hierzu kann eine vorbestimmte Funktionalität des Zugriffssicherungssystems an der Eingabeeinrichtung des Behältnisses ausgeführt werden.

Gemäß einer bevorzugten Ausführungsform der vorliegenden Erfindung werden zumindest der Autorisierungsschlüssel und der Sicherheitsschlüssel zeitbasiert erzeugt. Dabei bedeutet die zeitbasierte Erzeugung, dass die Zeit in irgendeiner Form Einfluss auf die Erzeugung des Autorisierungsschlüssels und des Sicherheitsschlüssels nimmt. Insbesondere kann die Echtzeit verwendet werden, die mit einem Echtzeitgeber in dem Sicherungsmodul vorgegeben wird und gleichzeitig in dem Autorisierungsschlüssel-Generator im Wesentlichen synchronisiert verstreicht. Ein DCF₇₇-Modul, das eine hochgenaue Echtzeitangabe über ein Funksignal empfangen kann, kann für den Autorisierungsschlüssel-Generator und/oder den Sicherheitsschlüssel-Generator eingesetzt werden. Es ist jedoch auch möglich, anstelle der Echtzeit eine virtuelle Zeit zu verwenden, die durch technische Maßnahmen in dem Sicherungsmodul und dem Autorisierungsschlüssel-Generator synchronisiert ist. Insbesondere kann die zeitbasierte Erzeugung ein sequentielles Erzeugen von Autorisierungsschlüssel und Sicherheitsschlüssel in vorbestimmten Intervallen umfassen. Beispielsweise kann in dem Sicherungsmodul alle 60 Sekunden ein neuer Sicherheitsschlüssel erzeugt werden, während in dem Autorisierungsschlüssel-Generator mit derselben Zeitbasis ebenfalls ein neuer Autorisierungsschlüssel erzeugt wird. Aufgrund der zeitsynchronen Generierung und unter der Voraussetzung, dass die Algorithmen zur Erzeugung der Schlüssel in dem Sicherheitsmodul und dem Autorisierungsschlüssel-Generator identisch sind, sollten im optimalen Fall die Autorisierungsschlüssel und die Sicherheitsschlüssel zu jedem Zeitpunkt identisch sein. Eine Zeitverschiebung bei ungenauer Zeitsynchronisation kann jedoch Abweichungen zur Folge haben. Diese Abweichungen können mit gewissen Toleranzen durch ein entsprechendes Modul in dem System berücksichtigt werden, so dass gewisse Abweichungen der Synchronisierung akzeptiert werden. Die Erneuerung der Autorisierungsschlüssel bzw. Sicherheitsschlüssel ist nicht auf einen Zeitraum von beispielsweise einer Minute beschränkt, sondern kann jeden Zeitraum, beispielsweise eine Sekunde, eine Stunde, einen Tag oder jeden anderen Zeitraum umfassen.

Ferner kann die zeitbasierte Erzeugung von Sicherheitsschlüssel und Autorisierungsschlüssel sich auf die Gültigkeitsdauer beziehen. Insbesondere für den Generalsicherheitsschlüssel und den Generalautorisierungsschlüssel kann eine Gültigkeitsdauer von beispielsweise einem Tag vorgegeben werden, wobei nach Verstreichen der vorgegebenen Gültigkeitsdauer die Gültigkeit des Dauersicherheitsschlüssels und des Dauerautorisierungsschlüssels entfällt.

Gemäß einer weiteren bevorzugten Ausführungsform der vorliegenden Erfindung werden die Eingaben in das Zugriffssicherungssystem in einer Vorgangsspeichereinrichtung abrufbar abgelegt, wobei die Vorgangsspeichereinrichtung vorzugsweise innerhalb des Behältnisses angeordnet ist. Die Vorgangsspeichereinrichtung ermöglicht es, Eingaben in das Sicherungsmodul oder Datenübertragungen sowie Manipulationen zu speichern. Die Daten können aus der Speichereinrichtung des Sicherungsmoduls abgerufen werden und beispielsweise über ein Anzeigefeld an dem Behältnis angezeigt werden. Außerdem ist es möglich, den Inhalt der Vorgangsspeichereinrichtung durch die Autorisierungsschlüssel-Zufuhreinrichtung abzufragen und die Informationen dem ortsfernen Rechnersystem zur weiteren Bewertung zu übermitteln.

Erfindungsgemäß erfolgt die Vorgabe des Offline-Modus beziehungsweise des Online-Modus durch Bestimmung der Qualität der Kommunikation zwischen Autorisierungsschlüssel-Zufuhreinrichtung und ortsfernem Rechnersystem. Erfindungsgemäß wird eine Bewertung der Qualität der Kommunikation, insbesondere der Kommunikationsverbindung, beziehungsweise der Datenübertragung zwischen Autorisierungsschlüssel-Zufuhreinrichtung und ortsfernem Rechnersystem gezielt vorgenommen, um eine Entscheidungsgrundlage für den Offline-Modus beziehungsweise den Online-Modus zu erzeugen. Die Bestimmung der Qualität der Kommunikation kann dabei über einen Drittanbieter, insbesondere über eine Datenbank erfolgen, die Angaben über die technischen Voraussetzungen für die Kommunikation, insbesondere über die Mobilfunknetzqualität oder ―verfügbarkeit repräsentiert. Diese Datenbank kann einer regelmäßigen Aktualisierung unterliegen. Ferner ist es möglich, mit der Autorisierungsschlüssel-Zufuhreinrichtung während der Verwendung im mobilen Einsatz eine Abfrage zur Bestimmung der Qualität der Kommunikationsverbindung zwischen der Autorisierungsschlüssel-Zufuhreinrichtung und dem ortsfernen Rechnersystem vorzunehmen. Die Ergebnisse der Abfrage können in vorbestimmten Zeiträumen, beispielsweise täglich, in der Autorisierungsschlüssel-Zufuhreinrichtung gespeichert werden und in regelmäßigen Abständen dem ortsfernen Rechnersystem zur Verfügung gestellt werden. Eine Datenbank, die im ortsfernen Rechnersystem vorgesehen ist, kann somit regelmäßig aktualisiert werden, so dass das ortsferne Rechnersystem Angaben über das Kommunikationsmerkmal für ein vorbestimmtes Behältnis vorgeben kann.

Erfindungsgemäß wird die Qualität der Kommunikation zwischen Autorisierungsschlüssel-Zufuhreinrichtung und ortsfernem Rechnersystem im Voraus, insbesondere eine vorbestimmte Zeit vor der Benutzung, vorgenommen. Durch diese Vorgehensweise kann im Voraus entschieden werden, welche Behältnisse mit dem Online-Modus oder dem Offline-Modus in Zusammenhang stehen. Dadurch wird im Voraus die Entscheidung ermöglicht, ob Autorisierungsschlüssel im Voraus in der Speichereinrichtung der Autorisierungsschlüssel-Zufuhreinrichtung abgelegt werden müssen oder vor Ort per Kommunikation mit dem ortsfernen Rechnersystem verfügbar gemacht werden können.

Gemäß einer weiteren bevorzugten Ausführungsform der vorliegenden Erfindung ist ein Adaptionsmodul zum Erstellen, Speichern und Aktualisieren von Verknüpfungen von Behältnis-Identifikationsmerkmalen mit einem entsprechenden Kommunikationsmerkmal vorgesehen, wobei die Verknüpfungen durch Bestimmungen der Qualität der Kommunikation zwischen Autorisierungsschlüssel-Zufuhreinrichtung und ortsfernem Rechnersystem erstellt und gegebenenfalls aktualisiert werden können. Mit Hilfe dieser bevorzugten Ausführungsform wird für im Wesentlichen alle Behältnisse, die in dem Zugriffssicherungssystem verwendet werden, ein Profil erstellt, das bei der Verwendung der Autorisierungsschlüssel-Zufuhreinrichtung vorgibt, welcher von dem Offline-Modus und von dem Online-Modus für ein vorbestimmtes Behältnis einsetzbar ist.

Gemäß einem weiteren Gesichtspunkt der vorliegenden Erfindung wird ein Verfahren zum Betrieb eines Zugriffssicherungssystems zur Verfügung gestellt, das vorstehend beschrieben ist. Das Verfahren weist die folgenden Schritte auf:
- Bestimmen des Behältnis-Identifikationsmerkmals, das mit einem ortsgebundenen Behältnis verknüpft ist, unter Verwendung der mobilen Autorisierungsschlüssel-Zufuhreinrichtung;
- Bestimmen der dem Behältnis-Identifikationsmerkmal zugeordneten Autorisierungsschlüsselart.

Gemäß diesem Verfahren wird das Behältnis-Identifikationsmerkmal mit Hilfe der Autorisierungsschlüssel-Zufuhreinrichtung bestimmt. Dabei kann vorzugsweise eine Einlesevorrichtung an der Autorisierungsschlüssel-Zufuhreinrichtung vorgesehen sein, die beispielsweise einen Zahlencode, einen alphanumerischen Code oder einen Barcode einlesen kann, der an dem Behältnis angebracht ist. Andere Möglichkeiten sind ebenso anwendbar, wie zum Beispiel die Nutzung eines Transponders, der im Ansprechen auf ein vorbestimmtes Signal einen Identifikationscode zurücksendet.

Gemäß dem Grundkonzept des Verfahrens zum Betrieb des Zugriffsicherungssystems wird somit ermöglicht, die Autorisierungsschlüssel-Zufuhreinrichtung selektiv im Online-Modus oder im Offline-Modus zu betreiben. Dabei wird insbesondere im Online-Modus die Sicherheit des Zugriffssicherungssystems maximiert, während im Offline-Modus bei akzeptabler Sicherheit die Anwendbarkeit des Systems unverändert ermöglicht wird.

Gemäß einer bevorzugten Ausführungsform der vorliegenden Erfindung weist das Verfahren zum Betrieb eines Zugriffssicherungssystems folgende Schritte auf:
- Abfragen des mit dem Behältnis-Identifikationsmerkmal verknüpften Kommunikationsmerkmals;
- Prüfen der Gültigkeit des bestimmten Kommunikationsmerkmals in der Umgebung des Behältnisses;
- Speicherung oder Übermittlung des Ergebnisses der Prüfung der Gültigkeit des Kommunikationsmerkmals;
- gegebenenfalls Aktualisierung des Kommunikationsmerkmals.

Gemäß dieser Ausführungsform wird die Aktualisierung der verfügbaren Information bezüglich der Zuordnung von Kommunikationsmerkmalen und Behältnissen gewährleistet. Insbesondere wird durch dieses System ermöglicht, während der Verwendung des Zugriffssicherungssystems und insbesondere während der Nutzung der Autorisierungsschlüssel-Zufuhreinrichtung zu prüfen, ob das aktuell einem Behältnis zugeordnete Kommunikationsmerkmal noch Gültigkeit hat, insbesondere ob das betreffende Behältnis sich in einem Bereich befindet, in welchem die Kommunikation zwischen der Autorisierungsschlüssel-Zufuhreinrichtung und dem ortsfernen Rechnersystem sichergestellt ist oder nicht. Diese Bestimmung kann durch Prüfen der Qualität der Kommunikationsverbindung zwischen der Autorisierungsschlüssel-Zufuhreinrichtung und dem ortsfernen Rechnersystem, insbesondere durch Prüfen der vorzugsweise verwendeten Mobilfunknetze erfolgen. Aufgrund der sich stetig ändernden Verfügbarkeit von Mobilfunknetzen in bestimmten Bereichen kann somit sichergestellt werden, dass der geeignete Modus, nämlich der Online-Modus oder der Offline-Modus, bei der Nutzung der Autorisierungsschlüssel-Zufuhreinrichtung Anwendung findet.

Gemäß einer bevorzugten Ausführungsform der vorliegenden Erfindung weist das Verfahren zum Betrieb des Sicherungssystems ferner folgende Schritte auf:
- Bestimmen der Vorgabe des Online-Modus oder des Offline-Modus auf Basis des abgefragten Kommunikationsmerkmals;
- Betreiben der Autorisierungsschlüssel-Zufuhreinrichtung im vorgegebenen Modus;
- Abrufen der Autorisierungsschlüssel, die im Voraus per Speichereinrichtung der Autorisierungsschlüssel-Zufuhreinrichtung gespeichert wurden, wenn der Offline-Modus vorgegeben ist; oder
- Übertragung der Autorisierungsschlüssel von dem ortsfernen Rechnersystem.

Mit der oben beschriebenen Vorgehensweise werden im Offline-Modus die Autorisierungsschlüssel verwendet, die im Voraus in der Speichereinrichtung der Autorisierungsschlüssel-Zufuhreinrichtung gespeichert wurden, so dass das Zugriffssicherungssystem weiterhin nutzbar ist, auch wenn keine Kommunikationsverbindung zwischen der Autorisierungsschlüssel-Zufuhreinrichtung und dem ortsfernen Rechnersystem verfügbar ist. Somit wird unter Inkaufnahme einer geringfügig verringerten Sicherheit die Verwendung des Zugriffssicherungssystems sichergestellt. Anderenfalls können die Autorisierungsschlüssel von dem ortsfernen Rechnersystem übertragen werden, wobei hierdurch die Sicherheit des Zugriffssicherungssystems maximiert wird, da die Autorisierungsschlüssel in dem ortsfernen Rechnersystem erzeugt werden und bei Verlust der Autorisierungsschlüssel-Zufuhreinrichtung die Autorisierungsschlüssel dem nicht autorisierten Nutzer nicht offenbart werden können.

Gemäß einem weiteren bevorzugten Ausführungsbeispiel der vorliegenden Erfindung weist das Verfahren zum Betrieb des Zugriffssicherungssystems die folgenden Schritte auf:
- Eingeben des Behältnis-Identifikationsmerkmals des Behältnisses;
- Bestimmen, ob ein einmal autorisierter Schlüssel verfügbar ist;
- Bereitstellen des Einmalautorisierungsschlüssels an der Autorisierungsschlüssel-Zufuhreinrichtung;
- Eingeben des bereitgestellten Einmalautorisierungsschlüssels in das Autorisierungsmodul;
- Bestimmen der Übereinstimmung des eingegebenen Einmalautorisierungsschlüssels und des von dem Sicherheitsschlüssel-Generator vorgegebenen Einmalschlüssels;
- Entsperren der Sperreinrichtung bei Übereinstimmung des eingegebenen Einmalautorisierungsschlüssels und des von dem Sicherheitsschlüssel-Generator vorgegebenem Einmalschlüssels;
- Unterbinden einer Entsperrung der Sperreinrichtung durch andere Autorisierungsschlüssel, bis die Sperreinrichtung mit dem eingegebenen Einmalautorisierungsschlüssel entsperrt wurde.

Bei dieser Ausführungsform wird ein Einmalautorisierungsschlüssel verwendet, dessen Eigenschaft sich von den allgemeinen Autorisierungsschlüsseln unterscheidet. Insbesondere wird der Einmalautorisierungsschlüssel dafür vorgesehen, Sendungen, insbesondere Retoursendungen, die von dem Anbieter der Zustelldienstleistung in Empfang genommen werden sollen, in dem Behältnis sicher ablegen zu können. Dies erfolgt in dem vorliegenden Ausführungsbeispiel dadurch, dass die Sendung durch den Besitzer des Behältnisses in dem Behältnis abgelegt wird, ein Einmalschlüssel vorgegeben wird, beispielsweise manuell eingegeben oder von dem Autorisierungsmodul des Sicherungsmoduls abgefragt wird, und dem Anbieter der Zustelldienstleistung direkt oder indirekt zugeführt wird. In dem vorliegenden Ausführungsbeispiel wird nach Sperren der Sperreinrichtung, während die Sendung sich in dem Behältnis befindet, ein Entsperren der Sperreinrichtung nur durch Eingeben oder Zuführen des Einmalautorisierungsschlüssels ermöglicht. Insbesondere wird nach dem Sperren der Sperreinrichtung bei Vorgabe eines Einmalschlüssels durch ein entsprechendes Modul verhindert, dass bei paralleler Nutzung des Zustellsicherungssystems durch andere Schlüssel unbeabsichtigt Zugriff auf den Inhalt des Behältnisses gewährt wird.

Gemäß einer weiteren bevorzugten Ausführungsform der vorliegenden Erfindung weist das Verfahren zum Betrieb des Zugriffssicherungssystems folgende Schritte auf:
- Eingeben eines Dauerautorisierungsschlüssels in das Autorisierungsmodul;
- Bestimmen der Übereinstimmung des eingegebenen Dauerautorisierungsschlüssels und des von dem Sicherheitsschlüssel-Generator vorgegebenen Dauerschlüssels;
- Bestimmen, ob die Sperreinrichtung durch einen Einmalautorisierungsschlüssel gesperrt ist;
- Entsperren der Sperreinrichtung bei Übereinstimmung des eingegebenen Dauerautorisierungsschlüssels und des von dem Sicherheitsschlüssel-Generator vorgegebenen Dauerschlüssels;
- Unterbinden einer Entsperrung der Sperreinrichtung bei Bestimmung, dass die Sperreinrichtung durch einen Einmalautorisierungsschlüssel gesperrt ist.

Der in diesem Ausführungsbeispiel verwendete Dauerautorisierungsschlüssel unterscheidet sich von den allgemeinen Autorisierungsschlüsseln. Der Dauerautorisierungsschlüssel ist dafür ausgelegt, zu einem beliebigen oder vorgebbaren Zeitpunkt Zugriff auf das Innere des Behältnisses zu ermöglichen. Der Dauerautorisierungsschlüssel ist vorzugsweise unveränderlich und entspricht über die gesamte Gültigkeitsdauer dem Dauerautorisierungsschlüssel, der von dem Autorisierungsmodul des Sicherungsmoduls vorgegeben wird. Hiermit wird ermöglicht, den Dauerautorisierungsschlüssel anderen Personen als dem Besitzer weiterzugeben, um nach Bedarf die Möglichkeit des Zugriffs auf das Innere durch andere Personen zu ermöglichen. Der Dauerautorisierungsschlüssel bzw. der Dauersicherheitsschlüssel muss nicht mit einer unbestimmten Gültigkeitsdauer versehen sein, sondern die Gültigkeit kann auf einen vorbestimmten Zeitraum beschränkt werden. Es ist ferner möglich, die Nutzbarkeit des Dauerautorisierungsschlüssels bzw. des Dauersicherheitsschlüssels für bestimmte zeitliche Bereiche zu beschränken, beispielsweise bestimmte Zeitfenster eines Tages oder vorbestimmte Wochentage.

Gemäß einer weiteren bevorzugten Ausführungsform der vorliegenden Erfindung weist das Verfahren zum Betrieb des Zugriffssicherungssystems die folgenden Schritte auf:
- Eingeben eines Generalautorisierungsschlüssels in das Autorisierungsmodul;
- Bestimmen der Übereinstimmung des Generalautorisierungsschlüssels und des von dem Sicherheitsschlüssel-Generator vorgegebenen Generalschlüssels;
- Bestimmen des Beladungszustands des Behältnisses;
- Entsperren der Sperreinrichtung bei Übereinstimmung des eingegebenen Generalautorisierungsschlüssels und des von dem Sicherheitsschlüssel- Generator vorgegebenen Generalschlüssels;
- Unterbinden einer Entsperrung der Sperreinrichtung bei Bestimmung, dass das Behältnis beladen ist.

Mit dieser Funktion des Generalautorisierungsschlüssels bzw. des Generalsicherheitsschlüssels kann einem vorbestimmten Nutzerkreis der Zugriff auf das Innere des Behältnisses gewährt werden, sofern das Behältnis leer ist und somit nicht die Gefahr besteht, dass materieller Schaden dadurch entsteht, dass Sendungen im Inneren des Behältnisses entwendet werden. Die Bestimmung, ob das Behältnis leer ist, kann durch Abgleich mit Informationen in der in dem ortsfernen Rechnersystem abgelegten Datenbank erfolgen. Da der Sendungsverkehr vorzugsweise während der Nutzung des Zugriffssicherungssystems ermittelt und in der Datenbank abgelegt wird, kann das ortsferne Computersystem aus den verfügbaren Informationen bewerten, ob sich eine Sendung in dem Behältnis befindet oder nicht. Beispielsweise kann eine Sendung durch den Anbieter der Zustelldienstleistung in dem Behältnis abgelegt werden, woraufhin das Behältnis mit der Sperreinrichtung gesperrt wird. Mit Hilfe der Autorisierungsschlüssel-Zufuhreinrichtung kann dem ortsfernen Rechnersystem mitgeteilt werden, dass die Sendung in dem Behältnis abgelegt wurde und das Behältnis mit der Sperreinrichtung gesperrt wurde. So lange der Besitzer des Behältnisses die Sendung im Inneren des Behältnisses nicht entnommen hat, wird bestimmt, dass das Behältnis beladen ist. Diese Kenntnis ist für das Sicherungsmodul verfügbar, da zum Entnehmen der Sendung ein Schlüssel, insbesondere ein Autorisierungsschlüssel, angegeben werden muss, um Zugriff auf das Innere des Behältnisses zu erlangen. Jedoch ist es ausreichend und bevorzugt, wenn für das Autorisierungsmodul die Information zum Beladungszustand des Behältnisses verfügbar ist und das Autorisierungsmodul diese Bestimmung autark vornimmt.

Mit dieser Ausführungsform wird sichergestellt, dass für einen gewissen Personenkreis ständig Zugriff auf das Behältnis besteht, während die Sicherheit des Zugriffssicherungssystems maximiert bleibt.

Gemäß einer weiteren bevorzugten Ausführungsform der vorliegenden Erfindung, weist das Verfahren zum Betrieb des Zugriffssicherungssystems folgende Schritte auf:
- Bestimmen, ob die Sperreinrichtung durch einen Einmalautorisierungsschlüssel gesperrt ist;
- Unterbinden einer Entsperrung der Sperreinrichtung bei Bestimmung, dass die Sperreinrichtung durch einen Einmalautorisierungsschlüssel gesperrt ist.

Mit dieser Ausführungsform wird für alle weiteren eingesetzten Schlüsselarten sichergestellt, dass ausschließlich der Verwender des Einmalautorisierungsschlüssels Zugriff auf das Behältnis hat. Damit wird die Sicherheit des Zugriffssicherungssystems weitergehend verbessert.

Gemäß einer weiteren vorteilhaften Ausführungsform der vorliegenden Erfindung weist das Verfahren zum Betrieb des Zugriffssicherungssystems die folgenden Schritte auf:
- Vorbestimmung eines Nutzungsprofils des Zugriffssicherungssystems, wobei das Nutzungsprofil die Nutzung einer Anzahl von Behältnissen mit entsprechend verknüpften Kommunikationsmerkmalen in einem vorgegebenen Zeitraum mit einer zugeordneten Autorisierungsschlüssel-Zufuhreinrichtung umfasst;
- wobei für die Nutzung mit dem vorbestimmten Nutzungsprofil ein Datenabgleich für die zugeordnete Autorisierungsschlüssel-Zufuhreinrichtung vorgenommen wird, der zumindest folgendes umfasst:
- Ermitteln eines Satzes Kommunikationsmerkmale, die den Offline-Modus vorgeben, von Behältnissen, die in dem vorgegebenen Zeitraum des Nutzungsprofils nutzbar sein sollen;
- Abrufen derjenigen Autorisierungsschlüssel, die mit den Kommunikationsmerkmalen verknüpft sind, die den Offline-Modus vorgeben, vor der Nutzung mit dem vorbestimmten Nutzungsprofil und Speichern der Autorisierungsschlüssel in der Autorisierungsschlüssel-Zufuhreinrichtung;
- Bereitstellung des Autorisierungsschlüssels aus der Speichereinrichtung der Autorisierungsschlüssel-Zufuhreinrichtung durch Eingabe des entsprechenden Behältnis-Identifikationsmerkmals in die Autorisierungsschlüssel-Zufuhreinrichtung.

Mit diesem bevorzugten Ausführungsbeispiel wird die Nutzbarkeit des Zugriffssicherungssystems weitergehend verbessert, während die Sicherheit unter Berücksichtigung der technischen Möglichkeiten optimiert wird. Das Nutzungsprofil des Zugriffssicherungssystems umfasst in diesem Zusammenhang eine räumliche und zeitliche Nutzung. Insbesondere ist in dem Nutzungsprofil eine Anzahl von Behältnissen erfasst, die von dem Anbieter der Zustelldienstleistung angefahren werden sollen. Ferner umfasst die zeitliche Komponente den Zeitraum, in welchem die vorstehend genannten Behältnisse des Nutzungsprofils angefahren werden sollen. Im konkreten Beispiel können die Behältnisse, die während eines Tages angefahren werden zu einem Nutzungsprofil zusammengefasst werden,. Insbesondere ist es möglich, das Nutzungsprofil als sich zeitlich wiederholendes Profil mit im Wesentlichen gleichbleibender Festlegung der Behältnisse einzurichten.

Da in der Praxis regelmäßig die Nutzungsprofile im Voraus bekannt sind, können aufgrund eines Datenabgleichs aus dem ortsfernen Rechnersystem Informationen erhalten werden, die es ermöglichen, diejenigen Autorisierungsschlüssel schon im Voraus in der Autorisierungsschlüssel-Zufuhreinrichtung abzulegen, bei denen der Offline-Modus verfügbar ist. Diejenigen Autorisierungsschlüssel, die für Behältnisse des Nutzungsprofils vorgesehen sind, in denen der Online-Modus vorgesehen ist, können hingegen vor Ort durch Eingabe des Behältnis-Identifikationsmerkmals von dem ortsfernen Rechnersystem erzeugt und zugestellt werden.

Gemäß einer weiteren bevorzugten Ausführungsform der vorliegenden Erfindung, weist das Verfahren zum Betrieb des Zugriffssicherungssystems die folgenden Schritte auf:
- Ermitteln eines Satzes Kommunikationsmerkmale, die den Online-Modus vorgeben,
- Ermitteln von Behältnissen, die in dem vorgegebenen Zeitraum des Nutzungsprofils nutzbar sein sollen;
- Übertragung derjenigen Autorisierungsschlüssel, die mit den Kommunikationsmerkmalen verknüpft sind, die den Online-Modus, nach Eingabe des Behältnis-Identifikationsmerkmals von dem ortsfernen Rechnersystem zu der Autorisierungs-Zufuhreinrichtung vorgeben.

Gemäß einem weiteren Gesichtspunkt der Erfindung, ist ein Zugriffssicherungssystem, bei dem die selektive Zuordnung von Online-Modus und Offline-Modus nicht wesentlich ist, mit folgenden Elementen vorgesehen:
- Einer Vielzahl ortsgebundener Behältnisse, von denen jedes eine Sperreinrichtung aufweist, die selektiv zum Ermöglichen des Zugriffs auf einen Innenraum des jeweiligen Behältnisses entsperrbar ist, und wobei jedem der ortsgebundenen Behältnisse ein Behältnis-Identifikationsmerkmal zugeordnet ist;
- einem ortsgebundenen Sicherungsmodul innerhalb des jeweiligen Behältnisses, das einen Sicherheitsschlüssel-Generator und ein Autorisierungsmodul aufweist;
- einer mobilen Autorisierungsschlüssel-Zufuhreinrichtung mit einer Speichereinrichtung und einem Kommunikationsmodul zum direkten oder indirekten Zuführen von Autorisierungsschlüsseln zu dem Autorisierungsmodul;
- wobei für die Autorisierungsschlüssel-Zufuhreinrichtung ein Sicherheitsmerkmal für zumindest einen der Autorisierungsschlüssel vorgebbar ist;
- wobei das Autorisierungsmodul eingerichtet ist, um vorgegebene Sicherheitsschlüssel mit zugeführten Autorisierungsschlüsseln zu vergleichen und das gegebenenfalls vorgegebene Sicherheitsmerkmal in den zugeführten Autorisierungsschlüsseln bei Zufuhr zu dem Autorisierungsmodul zu erkennen, wobei bei Feststellung einer Übereinstimmung eines vorgegebenen Sicherheitsschlüssels mit einem zugeführten Autorisierungsschlüssel durch das Autorisierungsmodul ein Signal zum Entsperren der Sperreinrichtung erzeugbar ist;
- wobei das Autorisierungsmodul bei Erkennung des Sicherheitsmerkmals in einem zugeführten Autorisierungsschlüssel diesen als aktuell gültigen Autorisierungsschlüssel setzt und die Erzeugung des Signals zum Entsperren der Sperreinrichtung nur bei Zufuhr des aktuell gültigen Autorisierungsschlüssels zu dem Autorisierungsmodul unter der Voraussetzung der vom Autorisierungsmodul festgestellten Übereinstimmung mit dem vorgegebenen Sicherheitsschlüssel gestattet.

Gemäß einer bevorzugten Ausführungsform des vorstehenden Gesichtspunkts der Erfindung, gestattet das Autorisierungsmodul die Erzeugung des Signals zum Entsperren der Sperreinrichtung bei Zufuhr von Autorisierungsschlüsseln zu dem Autorisierungsmodul, die nicht dem aktuell gültigen Autorisierungsschlüssel entsprechen, erst nach zumindest einmaliger Zufuhr des aktuell gültigen Autorisierungsschlüssels nach der Erkennung des Sicherheitsmerkmals.

Gemäß einer weiteren bevorzugten Ausführungsform des vorstehenden Gesichtspunkts der Erfindung, setzt das Autorisierungsmodul bei Erkennung, dass das Sicherheitsmerkmal in einem zugeführten Autorisierungsschlüssel nicht vorhanden ist, diesen als allgemeinen Autorisierungsschlüssel und gestattet die Erzeugung des Signals zum Entsperren der Sperreinrichtung bei nachfolgender Zufuhr von abweichenden Autorisierungsschlüsseln unter der Voraussetzung der vom Autorisierungsmodul festgestellten Übereinstimmung mit dem vorgegebenen Sicherheitsschlüssel.

Die Erfindung wird im Folgenden unter Bezugnahme auf ein bevorzugtes Ausführungsbeispiel des Zugriffssicherungssystems beschrieben. Das Ausführungsbeispiel ist lediglich beispielhafter Natur und soll den Gegenstand der vorliegenden Erfindung, der vorstehend dargelegt ist und in den Ansprüchen geschützt wird, nicht beschränken.

### KURZBESCHREIBUNG DER ZEICHNUNGEN

- Figur 1: zeigt ein Behältnis als Element des erfindungsgemäßen Zugriffssicherungssystems in einem Ausführungsbeispiel;
- Figur 2: zeigt Elemente des Zugriffssicherungssystems gemäß dem vorliegenden Ausführungsbeispiel;
- Figur 3: ist eine Darstellung zur Verdeutlichung verschiedener Schlüsselarten gemäß dem vorliegenden Ausführungsbeispiel;
- Figur 4: ist eine Darstellung zur Verdeutlichung verschiedener Nutzungsweisen des Zugriffssicherungssystems gemäß dem Ausführungsbeispiel;
- Figur 5: zeigt vereinfacht einen Ablauf der Nutzung des Zugriffssicherungssystems gemäß dem Ausführungsbeispiel.

Im Folgenden wird ein Ausführungsbeispiel der vorliegenden Erfindung unter Bezugnahme auf die Zeichnungen beschrieben.

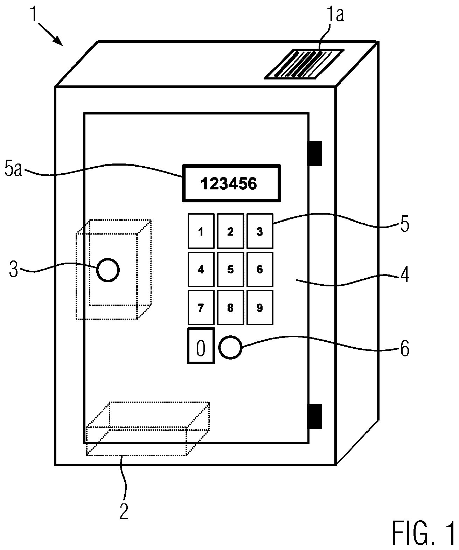

Die Elemente des Zugriffssicherungssystems gemäß den vorigen Ausführungsbeispielen werden im Folgenden anhand der Zeichnungen erläutert. Figur 1 zeigt ein Behältnis 1, das als quaderförmiger oder würfelförmiger Kasten ausgeführt ist, der an einer Seite mit einer Tür 4 versehen ist. Tür 4 ist schwenkbar an den Hauptkörper des Behältnisses 1 angebracht. Die Abmessungen und die Form des Behältnisses sind für das Grundkonzept der vorliegenden Erfindung unwesentlich. Das Volumen im Inneren des Behältnisses 1 ist so eingerichtet, dass ein Gegenstand, wie zum Beispiel eine Sendung mit einer vorbestimmten Abmessung aufgenommen werden kann.

An dem Behältnis 1 ist eine Sperreinrichtung 3 vorgesehen. Die Sperreinrichtung 3 hat die Funktion zum Sperren der Tür 4, so dass diese im gesperrten Zustand nicht geöffnet werden kann, wohingegen die Tür im entsperrten Zustand geöffnet werden kann. Die Sperreinrichtung 3 kann als Magnetschloss, elektromotorisch angetriebenes Schloss oder ähnliches ausgeführt werden. Die spezifische Ausgestaltung der Sperreinrichtung 3 ist nicht wesentlich. Jedoch soll die Sperreinrichtung 3 durch ein Signal wahlweise zwischen dem gesperrten und dem entsperrten Zustand umschaltbar sein.

In dem in Figur 1 gezeigten Beispiel weist das Behältnis 1 ein Tastaturfeld 5 auf, das in dem gezeigten Beispiel an der Außenfläche der Tür 4 angebracht ist. Die Position des Tastaturfeldes 5 ist jedoch nicht wesentlich, solange der Nutzer das Tastaturfeld bedienen kann. Ferner ist eine Anzeige 5a vorgesehen, auf der alphanumerische Angaben anzeigbar sind. Die Anzeige ist nicht auf eine bestimmte Ausgestaltung beschränkt.

Das Behältnis 1 weist ferner im in Figur 1 gezeigten Beispiel ein Behältnis-Identifikationsmerkmal 1a auf, das im gezeigten Beispiel als Barcode oder Strichcode aufgeführt ist. Das als Barcode oder Strichcode ausgeführte Behältnis-Identifikationsmerkmal 1a enthält eine kodierte Information, mit der das Behältnis identifizierbar ist. Die Zuordnung der Behältnis-Identifikationsmerkmale 1a für die entsprechenden Behältnisse 1, die im Zugriffssicherungssystem verwendet werden, muss jedoch nicht eindeutig sein. Es ist möglich, weitere Merkmale wie beispielsweise Standort oder ähnliches in den Vorgang der Identifizierung zusätzlich zu den Behältnis-Identifikationsmerkmal 1a einfließen zu lassen.

Im Inneren des Behältnisses 1 ist ein Sicherungsmodul 2 untergebracht. Das Sicherungsmodul 2 weist im vorliegenden Ausführungsbeispiel zumindest einen integrierten Schaltkreis und eine Speichereinrichtung auf. Ferner ist das Sicherungsmodul 2 ausgelegt, um mit dem Tastaturfeld 5 und der Anzeige 5a zu kommunizieren. Darüber hinaus umfasst das Sicherungsmodul 2 ein Autorisierungsmodul, das funktional in das Sicherungsmodul integriert ist.

Das Autorisierungsmodul, das Bestandteil des Sicherungsmoduls 2 ist, kann ein Signal zum Sperren oder Entsperren der Sperreinrichtung 3 an diese abgeben. Dieses Signal kann beispielsweise eine Steuerspannung aufweisen, die einen Magnetmechanismus oder einen elektromotorischen Mechanismus in der Sperreinrichtung 3 ansteuert, so dass der gesperrte und entsperrte Zustand der Sperreinrichtung 3 erzielbar ist.

Das Sicherungsmodul 2 ist innerhalb des Behältnisses untergebracht, so dass bei gesperrter Sperreinrichtung 3 der Zugriff auf das Sicherungsmodul 2 ausgeschlossen ist. Zusätzlich kann das Sicherungsmodul 2 in einem Gehäuse untergebracht werden, welches zusätzlich mit Kunstharz oder ähnlichem vergossen ist. Vorzugsweise ist das Sicherungsmodul 2 derart gestaltet, dass bei Manipulation das Sicherungsmodul 2 zerstört wird, so dass der Zugriff auf die enthaltenen Daten ausgeschlossen ist.

Das Behältnis 1 ist als ortsfeste Einheit ausgestaltet. Hierzu kann das Behältnis 1 an einem stationärem Element, zum Beispiel einer Bauwerkwand oder einem Fundament befestigt werden. Die Befestigung ist vorzugsweise so gestaltet, dass bei gesperrter Sperreinrichtung 3 eine Entfernung des Behältnisses 1 von dem stationären Element unmöglich ist. Im besten Fall ist es vollständig ausgeschlossen, das Behältnis 1 von dem stationären Element zu entfernen.

Das in Figur 1 gezeigte Behältnis 1 ist einer Adresse, insbesondere einer Postadresse zugeordnet. Insofern kann das Behältnis 1 als Art eines Briefkastens verstanden werden, der einer Adresse zugeordnet ist.

Das Behältnis 1 weist ferner ein Kommunikationsmodul 6 auf, das im Datenaustausch mit dem Sicherungsmodul 2 stehen kann. Das Kommunikationsmodul 6 kann eine Kommunikation mit verschiedenen Vorrichtungen herstellen. Die Kommunikation kann beispielsweise als Drahtlosverbindung hergestellt werden. Jede andere Kommunikationsmöglichkeit ist jedoch ebenfalls möglich.

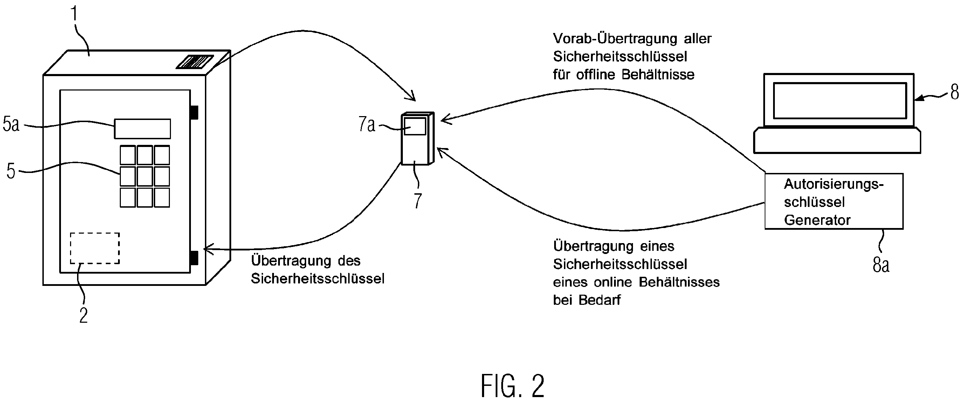

Figur 2 zeigt Komponenten des Zugriffssicherungssystems in einem Ausführungsbeispiel. Das Behältnis 1 entspricht dem in Figur 1 gezeigten Behältnis. Als weiteres Element des Zugriffssicherungssystems ist eine Autorisierungsschlüssel-Zufuhreinrichtung 7 vorgesehen. Die Autorisierungsschlüssel-Zufuhreinrichtung 7 ist als Hand-Held-Gerät ausgestaltet, die insbesondere tragbar und mobil ist. Die Autorisierungsschlüssel-Zufuhreinrichtung 7 weist unter anderem eine Anzeige 7a auf. Weitere Elemente der Autorisierungsschlüssel-Zufuhreinrichtung 7 umfassen einen Barcodescanner, eine Tastatur zur Eingabe von Daten oder Informationen, ein Kommunikationsmodul zur drahtlosen Kommunikation insbesondere mit dem Kommunikationsmodul 6 des Behältnisses 1 und ein Mobilfunckommunikationsmodul auf.

Als weiteres Element des Zugriffsicherungssystems ist in Figur 2 ein ortsfernes Rechnersystem 8 gezeigt. Das ortsferne Rechnersystem 8 ist als PC ausgeführt, jedoch kann jede andere Art des Rechnersystems verwendet werden. Das ortsferne Rechnersystem 8 ist insbesondere netzwerkfähig und in der speziellen Anwendung mit dem Internet verbindbar. Andere Netzwerktypen sind jedoch nicht ausgeschlossen.

Im Folgenden wird die Funktionalität der Autorisierungsschlüssel-Zufuhreinrichtung 7 erläutert. Die Autorisierungsschlüssel-Zufuhreinrichtung 7 weist ein Mobilfunkkommunikationsmodul auf, mit welchem eine Verbindung zu dem ortsfernen Rechnersystem 8 herstellbar ist. Insbesondere ist das Mobilfunkkommunikationsmodul der Autorisierungsschlüssel-Zufuhreinrichtung 7 dazu eingerichtet, über eine Netzwerkverbindung einen Datenaustausch mit dem ortsfernen Rechnersystem 8 zu ermöglichen. Während eine gesicherte Internetverbindung möglich ist, ist jede andere Verbindung außerhalb des Internets denkbar.

Das Mobilfunkkommunikationsmodul der Autorisierungsschlüssel-Zufuhreinrichtung 7 verwendet öffentlich verfügbare Mobilfunkzellen. Hierzu ist anzumerken, dass die öffentlich verfügbaren Mobilfunkzellen nicht flächendeckend funktionstüchtig sind und entweder starken Einschränkungen in der Leistungsfähigkeit bei der Datenübertragung unterliegen oder in gewissen Regionen überhaupt nicht verfügbar sind. Diese Verfügbarkeit betrifft insbesondere ländliche Regionen, wohingegen in Städten die Netzabdeckung nahezu 100 Prozent beträgt.

Die Autorisierungsschlüssel-Zufuhreinrichtung 7 weist eine Speichereinrichtung auf, in der Daten ablegbar sind, die der Autorisierungsschlüssel-Zufuhreinrichtung 7 zugeführt werden. Diese Daten können solche Daten umfassen, die über das Tastenfeld eingegeben werden, die über das Mobilfunkkommunikationsmodul übertragen werden, und diejenigen die über das Kommunikationsmodul 6 des Behältnisses 1 übertragen werden. Die Autorisierungsschlüssel-Zufuhreinrichtung kann ferner über ein GPS-Modul verfügen, um die gegenwärtige Position oder das Bewegungsprofil der Autorisierungsschlüssel-Zufuhreinrichtung zu ermitteln.

Im Folgenden wird die Verschlüsselungstechnologie erläutert, mit der das Zugriffssicherungssystem verwendet wird. Das Sicherungsmodul 2 innerhalb des Behältnisses 1 umfasst ein Modul zum Erzeugen von Schlüsseln. Die Erzeugung der Schlüssel erfolgt nach einem vorbestimmten Algorithmus. Das Autorisierungsmodul des Sicherungsmoduls 2 kann beispielsweise über das Tastaturfeld 5 eingegebene Autorisierungsschlüssel empfangen und diese mit dem erzeugten Schlüssel vergleichen. Bei Identität des Schlüssels, der in dem Sicherungsmodul 2 vorgegeben wird, und dem eingegeben Autorisierungsschlüssel gibt das Autorisierungsmodul ein Signal zum Entsperren der Sperreinrichtung 3 ab.

Im oben dargestellten einfachsten Fall ist der Schlüssel, der im Sicherungsmodul 2 erzeugt wird, ein statischer Schlüssel und ist der Autorisierungsschlüssel, der an dem Tastaturfeld eingegeben wird, ebenfalls statisch beziehungsweise unveränderlich, so dass in diesem dargestellten einfachsten Fall ein elektronisch unterstütztes Zahlenschloss vorliegt, das bei Kenntnis des statischen Autorisierungsschlüssels Zugang zu dem Innenraum des Behältnisses 1 ermöglicht.

Das vorliegende Zugriffssicherungssystem wird jedoch mit einer Vielzahl von Behältnissen 1 und in der Regel ebenfalls einer Vielzahl von Autorisierungsschlüssel-Zufuhreinrichtungen 7 verwendet. Insbesondere ist das vorliegende Zugriffssicherungssystem zur Verwendung für einen Anbieter einer Zustelldienstleistung eingerichtet.

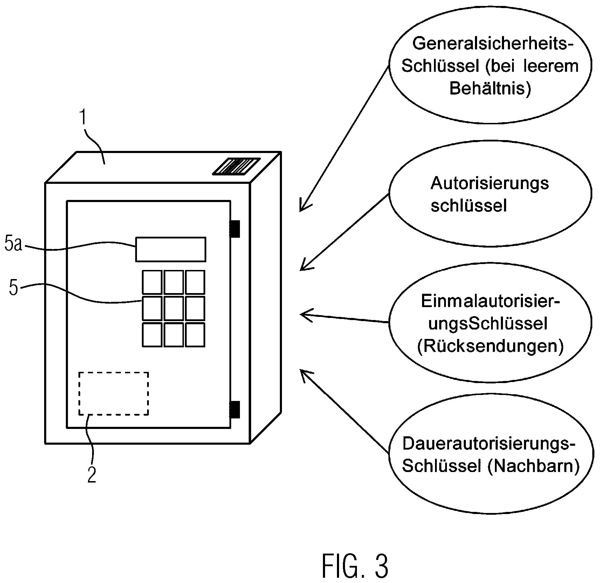

In Figur 3 sind die im vorliegenden Ausführungsbeispiel verfügbaren Schlüsselarten skizziert. Die Auflistung ist nicht abschließend und andere Schlüsselarten können alternativ oder kumulativ mit dem erfindungsgemäßen Zugriffssicherungssystem verwendet werden. Die Erzeugung, Weiterverarbeitung und Handhabung der verschiedenen Schlüssel erfolgt in zugehörigen Modulen, die in der Hardware des Zugriffssicherungssystems angelegt sind.

### Generalsicherheitsschlüssel

Zur Bereitstellung der Option für den Anbieter der Zustelldienstleistung wird ein Generalsicherheitsschlüssel zur Verfügung gestellt. Dieser Generalsicherheitsschlüssel ist dem Anbieter der Zustelldienstleistung bekannt und kann ein statischer Schlüssel sein. Vorzugsweise ist der Generalsicherheitsschlüssel mit einer begrenzten Gültigkeitsdauer ausgestattet, beispielsweise einer Gültigkeitsdauer von einem Tag. Der Generalsicherheitsschlüssel ist in dem Sicherungsmodul 2 vorgebbar und kann mit Hilfe des Autorisierungsmoduls mit einem eingegeben Generalautorisierungsschlüssel verglichen werden. Bei Übereinstimmung wird von dem Autorisierungsmodul ein Signal zum Entsperren der Sperreinrichtung 3 abgegeben, so dass Zugriff auf das Innere des Behältnisses 1 ermöglicht wird, allerdings nur unter Voraussetzung, dass eine Bestimmung des Beladungszustandes des Behältnisses ergibt, dass dieses leer ist. Die Bestimmung des Beladungszustands erfolgt mithilfe der Informationen, die bei der Verwendung des Zugriffssicherungssystems verfügbar sind und innerhalb des Zugriffsicherungssystems ausgetauscht werden. Insbesondere wird mithilfe der Autorisierungsschlüssel-Zufuhreinrichtung 7 das Ablegen einer Sendung in dem Behältnis 1 als Information eingegeben. Somit ist der Beladungszustand des Behältnisses 1 insofern bekannt, dass sich eine Sendung in dem Behältnis 1 befindet und somit das Behältnis 1 beladen ist.

Wird durch Eingabe eines Autorisierungsschlüssels durch den Besitzer oder eine beauftragte Person das Behältnis 1 geöffnet, wird davon ausgegangen, dass die Sendung aus dem Behältnis 1 entnommen wird. Somit wird in dem Sicherungsmodul 2, insbesondere in der dort vorgesehenen Speichereinrichtung die Information abgelegt, dass die Sendung entnommen wurde und somit das Behältnis leer ist. Insofern hat das Sicherungsmodul 2 Kenntnis über den Beladungszustand des Behältnisses 1 und kann diese Information dem Autorisierungsmodul verfügbar machen, um zu entscheiden, ob der Generalautorisierungsschlüssel zur Abgabe des Signals zum Entsperren der Sperreinrichtung 3 führt oder nicht. Denn somit die Information, dass sich eine Sendung in dem Behältnis 1 befindet, für das Autorisierungsmodul 2 verfügbar ist, wird die Eingabe nicht dazu führen, dass das Signal zum Entsperren der Sperreinrichtung 3 abgegeben wird. Mit dieser Funktion wird ermöglicht, Zugriff auf das Innere des Behältnisses 1 zu gewähren, sofern das Behältnis leer ist und eine unberechtigte Entnahme von Sendungen unwahrscheinlich ist.

### Autorisierungsschlüssel

Für die Verwendung des Zugriffsicherungssystems werden allgemeine Autorisierungsschlüssel eingesetzt. Insbesondere können Autorisierungsschlüssel dem Autorisierungsmodul 2 zugeführt werden, welches die vom Sicherungsmodul 2 vorgegeben Sicherheitsschlüssel mit dem zugeführten Autorisierungsschlüssel vergleicht. Bei Übereinstimmung wird von dem Autorisierungsmoduls des Sicherungsmoduls 2 ein Signal zum Entsperren der Sperreinrichtung abgegeben, so dass Zugriff auf das Innere des Behältnisses 1 gewährt wird. Der Autorisierungsschlüssel ist im vorliegenden Ausführungsbeispiel als nichtstatischer Schlüssel ausgeführt und wird nach einem vorbestimmten Algorithmus periodisch erneuert. Der von dem Sicherungsmodul 2 vorgegebene Sicherheitsschlüssel ist ebenfalls nichtstatisch und wird auf der Grundlage desselben Algorithmus mit derselben Zeitbasis periodisch erneuert. Die Zeitbasis kann dabei 60 Sekunden, 10 Minuten oder jede beliebige andere Zeitdauer umfassen, so dass die ausreichende Sicherheit gewährleistet wird.

Die Eingabe des Autorisierungsschlüssels führt jedoch auch bei Übereinstimmung mit dem vorgegebenen Sicherheitsschlüssel nicht bedingungslos zur Abgabe des Signals zum Entsperren der Sperreinrichtung 3, wie nachfolgend erläutert wird.

Der Autorisierungsschlüssel kann auch ein Sicherheitsmerkmal aufweisen. Das Sicherheitsmerkmal wird bei der Erzeugung des Autorisierungsschlüssels im ortsfernen Rechnersystem 8 zur Verfügung gestellt und dem Autorisierungsschlüssel hinzugesetzt. Das Sicherheitsmerkmal kann aus einem Bit bestehen, das beispielsweise bei Vorliegen des Sicherheitsmerkmals gesetzt wird. Andere Möglichkeiten bestehen darin, das Sicherheitsmerkmal als berechenbares Element des Schlüssels zu gestalten. In jedem Fall ist das Sicherheitsmerkmal von dem Autorisierungsmodul des Sicherungsmoduls 2 erkennbar, so dass das Autorisierungsmodul bei Eingabe eines Autorisierungsschlüssels feststellen kann, ob der Autorisierungsschlüssel ein Sicherheitsmerkmal aufweist oder nicht.

Das Sicherheitsmerkmal und die Bestimmung des Vorhandenseins des Sicherheitsmerkmals bei Zuführung eines Autorisierungsschlüssels verfolgt den Zweck, das Abgeben des Signals zum Entsperren der Sperreinrichtung 3 zu beschränken, wie im Folgenden dargelegt ist.

Das Zugriffsicherungssystem des vorliegenden Ausführungsbeispiels ist verwendbar zur parallelen Nutzung von mehreren Anbietern der Zustelldienstleistung. Jeder Anbieter verwendet dabei denselben Satz Behältnisse 1 mit derselben Hardware. Ferner verwendet jeder Anbieter eine Autorisierungsschlüssel-Zufuhreinrichtung, die mit den hier beschriebenen Funktionen versehen ist. Das ortsferne Rechnersystem 8 kann einheitlich von allen Anbietern verwendet werden. Alternativ kann jeder Anbieter ein eigenes ortsfernes Rechnersystem 8 betreiben, sofern eine Datenaustauschmöglichkeit zwischen den ortsfernen Rechnersystemen 8 besteht.

Jeder Anbieter der Zustelldienstleistung kann die Funktionalität des Zugriffsicherungssystems nutzen. Da dies der Fall ist, besteht die Möglichkeit, dass eine Sendung durch einen Anbieter der Zustelldienstleistung in dem Behältnis 1 abgelegt wurde und vor der Entnahme dieser Sendung durch den Besitzer ein weiterer Anbieter der Zustelldienstleistung eine weitere Sendung in dem Behältnis 1 ablegen möchte. Um insbesondere bei Wertsendungen, deren materieller oder sonstiger Wert überdurchschnittlich hoch ist und deren Verlust einen beträchtlichen Schaden bedeuten würde, eine nichtautorisierte Entnahme durch einen Mitarbeiter eines Anbieters der Zustelldienstleistung zu verhindern, kann somit bei Zustellung einer solchen Wertsendung dem Autorisierungsschlüssel das oben beschriebene Sicherheitsmerkmal zugefügt werden.

Das Autorisierungsmodul des Sicherungsmoduls 2 wird bei Zufuhr des Autorisierungsschlüssels durch Bewertung des Schlüsselinhalts feststellen können, ob ein Sicherheitsmerkmal für diesen Autorisierungsschlüssel vorliegt oder nicht. Wenn das Autorisierungsmodul feststellt, dass der zugeführte Autorisierungsschlüssel ein Sicherheitsmerkmal enthält, wird nach dem Ablegen der Sendung in dem Behältnis und dem Schließen der Tür das erneute Öffnen des Behältnisses und der Zugriff auf das Innere desselben durch Entsperren der Sperreinrichtung 3 erst dann ermöglicht, wenn der Besitzer oder eine beauftragte Person die Wertsendung aus dem Behältnis 1 entnimmt. Das Autorisierungsmodul enthält nämlich ein spezifisches Modul, mit welchem die Erzeugung des Signals zum Entsperren der Sperreinrichtung 3 unterbunden wird, bis die Sperreinrichtung von dem Besitzer des Behältnisses 1 zur Entnahme der Wertsendung entsperrt wird. Diese Entsperrung kann durch Eingabe desselben Autorisierungsschlüssels erfolgen oder durch einen Dauerautorisierungsschlüssel, der als statischer Schlüssel nur dem Besitzer oder autorisierten Personen bekannt ist und ohne Beschränkung Zugriff auf das Innere des Behältnisses 1 gewährt. Der Dauerautorisierungsschlüssel wird weiter unten erläutert.

### Einmalautorisierungsschlüssel

Für den Fall, dass der Besitzer des Behältnisses 1 eine Sendung in dem Behältnis 1 ablegt mit der Aufforderung an den Anbieter der Zustelldienstleistung, diese Sendung als Retoure o. ä. abzuholen, kann ein Einmalautorisierungsschlüssel vorgegeben werden, der dem Anbieter der Zustelldienstleistung mitgeteilt wird. Dabei kann der Einmalautorisierungsschlüssel durch eine entsprechende Abfrage des Sicherungsmoduls 2 erzeugt werden oder durch Eingabe beispielsweise an dem Tastaturfeld 5 vorgegeben werden. Nachdem das Behältnis 1 verschlossen ist und der Einmalautorisierungsschlüssel vorgegeben oder erzeugt wurde, wird die Erzeugung des Signals zum Entsperren der Sperreinrichtung 3 durch das Autorisierungsmodul des Sicherungsmoduls 2 unterbunden, um somit die nichtautorisierte Entnahme der Sendung durch Eingabe von zwar gültigen, aber abweichenden Autorisierungsschlüsseln zu verhindern. Hierzu weist das Autorisierungsmodul des Sicherungsmoduls 2 ein Modul auf, mit welchem die Erzeugung des Signals zum Entsperren der Sperreinrichtung 3 nach Vorgabe oder Erzeugung des Einmalautorisierungsschlüssels und nach Schließen des Behältnisses 1 nur durch diesen Einmalautorisierungsschlüssel initiiert werden kann. Andere Autorisierungsschlüssel, die dem Autorisierungsmodul zugeführt werden, bevor dieser Einmalautorisierungsschlüssel zugeführt wurde, werden abgelehnt und führen nicht zu der Erzeugung des Signals zum Entsperren der Sperreinrichtung 3.

Sobald beispielsweise der Anbieter der Zustelldienstleistung den Einmalautorisierungsschlüssel dem Autorisierungsmodul zugeführt hat, wird das Signal zum Entsperren der Sperreinrichtung 3 erzeugt, kann die Tür des Behältnisses 1 geöffnet werden und ist somit die Sendung, beispielsweise die Retoure für den Anbieter der Zustelldienstleistung verfügbar. Das Autorisierungsmodul des Sicherungsmoduls 2 erkennt diesen Vorgang und hebt die Beschränkung für von dem Einmalautorisierungsschlüssel abweichenden Autorisierungsschlüssel auf. Somit ist das Behältnis 1 wieder für andere Autorisierungsschlüssel nutzbar.

Die Zustellung des Einmalautorisierungsschlüssels, der von dem Sicherungsmodul 2 auf Anfrage durch den Besitzer erzeugt wird oder durch den Besitzer selbst vorgegeben wird, kann auf jedem Wege dem Anbieter der Zustelldienstleistung zugeführt werden, beispielsweise durch ein Online-Portal, telefonisch oder postalisch.

### Dauerautorisierungsschlüssel

Für den Besitzer zur eigenen Anwendung des Zugriffsicherungssystems und zur Übertragung der Zugriffsrechte auf beauftragte Personen steht ein Dauerautorisierungsschlüssel zur Verfügung. Dieser Dauerautorisierungsschlüssel ist als statischer Schlüssel ausgeführt. Der Dauerschlüssel, der in dem Autorisierungsmodul des Sicherungsmoduls 2 vorgegeben oder vorgebbar ist, ist ebenfalls als statischer Schlüssel ausgeführt. Somit kann der Besitzer des Behältnisses 1 den Dauerautorisierungsschlüssel beispielsweise an Nachbarn oder andere beauftragte Personen weitergeben, um eventuell in das Behältnis 1 abgelegte Sendungen in seinem Auftrag zu entnehmen. Es besteht die Möglichkeit, den Dauerautorisierungsschlüssel mit gewissen Beschränkungen zu versehen, beispielsweise einer zeitlichen Beschränkung, sodass nur zu gewissen Tageszeiten oder an gewissen Wochentagen der Dauerautorisierungsschlüssel gültig ist. Solche Vorgaben können beispielsweise direkt in das Tastaturfeld 5 des Behältnisses 1 eingegeben werden.

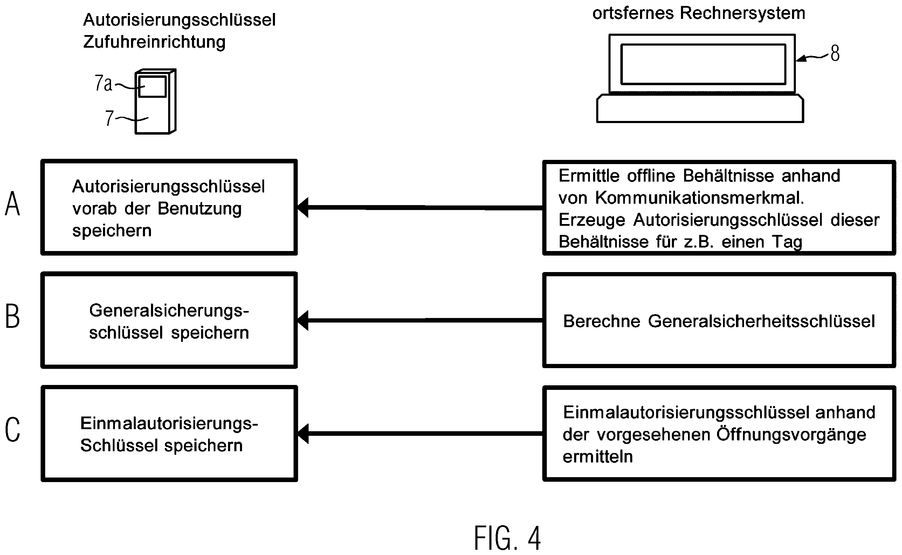

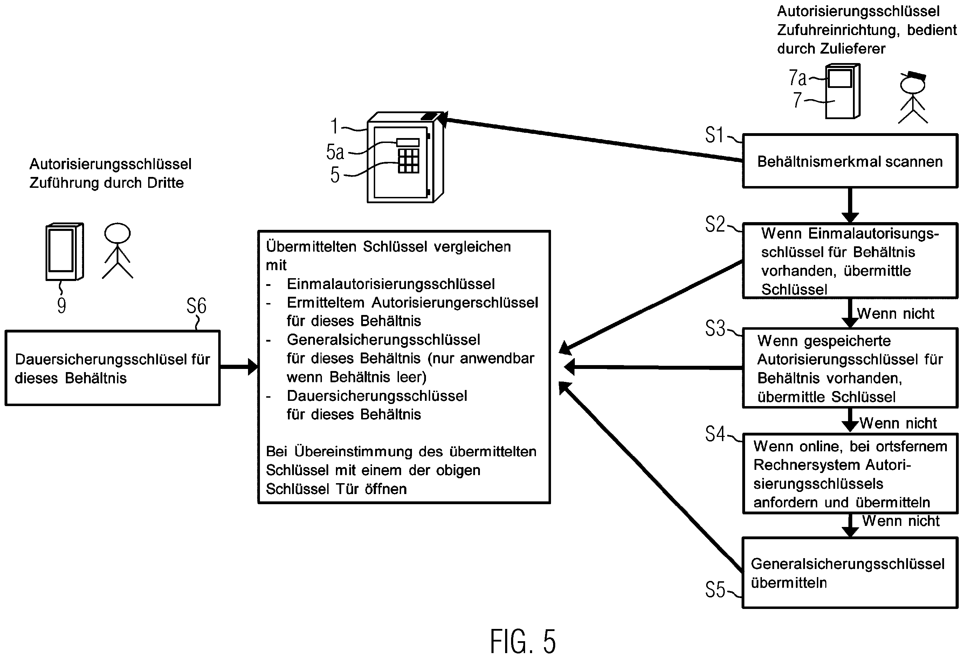

Figur 4 zeigt die Funktionsweise des Zugriffsicherungssystems anhand von Beispielen, insbesondere die Funktionen, die der Autorisierungsschlüssel-Zufuhreinrichtung 7 und dem ortsfernen Rechnersystem 8 zugeordnet sind. Dabei zeigt Figur 4 insbesondere die Speicherung von Informationen in der Autorisierungsschlüssel-Zufuhreinrichtung, wie sie vor Beginn der Tour des Mitarbeiters erfolgt. Ferner ist der Ablauf der Nutzung des Zugriffssicherungssystems gemäß dem Ausführungsbeispiel in Figur 5 vereinfacht dargestellt.

Das Zugriffsicherungssystem ist insbesondere anwendbar für Anbieter von Zustelldienstleistungen, bei denen üblicherweise ein vorbestimmtes Nutzungsprofil vorliegt, das im Voraus bekannt ist, wie beispielsweise diejenigen Behältnisse 1, die an einem Tag von einem Mitarbeiter des Anbieters angefahren werden. Somit ist dem ortsfernen Rechnersystem 8 in der Regel im Voraus bekannt, welche Behältnisse 1 angefahren werden, wie in Abschnitt A in Figur 4 dargestellt ist. Das ortsferne Rechnersystem 8 ermittelt vor dem Eintritt in das Nutzungsprofil Kommunikationsmerkmale, die den Behältnissen 1 jeweils zugeordnet sind. Die Kommunikationsmerkmale enthalten Informationen über die Möglichkeit, vor Ort des Behältnisses 1 eine Kommunikationsverbindung zwischen der Autorisierungsschlüssel-Zufuhreinrichtung und dem ortsfernen Rechnersystem 8 herzustellen. Somit wird mithilfe des Kommunikationsmerkmals unterschieden, ob an einem vorbestimmten Behältnis 1 des Nutzungsprofils der Online-Modus oder der Offline-Modus vorgegeben wird. Bei der Bestimmung, dass ein vorbestimmtes Behältnis 1 sich an einem Ort befindet, in welchem beispielsweise kein Mobilfunknetz verfügbar ist, wird das Kommunikationsmerkmal für den Offline-Betrieb vorgegeben. Für diejenigen Behältnisse 1, bei denen eine Mobilfunkverbindung verfügbar ist, wird hingegen das Kommunikationsmerkmal des Online-Modus vorgegeben.

Vor dem Eintritt in das vorbestimmte Nutzungsprofil, insbesondere vor dem Beginn der Tour durch den Mitarbeiter des Anbieters der Zustelldienstleistung, werden notwendige Daten von dem ortsfernen Rechnersystem 8 in die Speichereinrichtung der Autorisierungsschlüssel-Zufuhreinrichtung abgelegt. Dabei werden für die Behältnisse 1, für die der Online-Modus vorgegeben ist, keine Autorisierungsschlüssel in der Speichereinrichtung der Autorisierungsschlüssel-Zufuhreinrichtung 7 gespeichert. Für diejenigen Behältnisse 1, für die der Offline-Modus vorgeben ist, werden die benötigten Autorisierungsschlüssel in der Speichereinrichtung der Autorisierungsschlüssel-Zufuhreinrichtung abgelegt.

Bei Nutzung des Systems auf der Grundlage des vorgegebenen Nutzungsprofils werden die dem Nutzungsprofil zugehörigen Behältnisse 1 angefahren und werden ggf. Sendungen in entsprechende Behältnisse 1 abgelegt. Hierzu wird eine Einleseeinrichtung der Autorisierungsschlüssel-Zufuhreinrichtung 7 verwendet, um das Behältnis-Identifikationsmerkmal 1a einzulesen. Im vorliegenden Ausführungsbeispiel wird somit der Barcode als Behältnis-Identifikationsmerkmal 1a eingelesen und wird daraufhin an der Autorisierungsschlüssel-Zufuhreinrichtung 7 ein Autorisierungsschlüssel verfügbar.

Wenn das Kommunikationsmerkmal, das dem betreffenden Behältnis 1 zugeordnet ist, den Offline-Modus vorgibt, wird der Autorisierungsschlüssel aus der Speichereinrichtung der Autorisierungsschlüssel-Zufuhreinrichtung 7 bezogen. Für den Fall, dass dem betreffenden Behältnis 1 ein Kommunikationsmerkmal zugeordnet ist, das den Online-Modus vorgibt, wird der Autorisierungsschlüssel auf dem ortsfernen Rechnersystem 8 auf Anforderung durch die Autorisierungsschlüssel-Zufuhreinrichtung erzeugt und an dieser verfügbar gemacht.

Insbesondere kann der Autorisierungsschlüssel sowohl im Online-Modus als auch im Offline-Modus auf der Anzeige 7a der Autorisierungsschlüssel-Zufuhreinrichtung 7 angezeigt werden, sodass dieser Autorisierungsschlüssel in das Tastaturfeld 5 des Behältnisses 1 eingebbar ist. Alternativ kann auch über eine Drahtlosverbindung eine Datenübertragung von der Autorisierungsschlüssel-Zufuhreinrichtung 7 und dem Behältnis 1, insbesondere dem Sicherungsmodul 2 vorgesehen sein.

Der Generalsicherheitsschlüssel, der dem Anbieter der Zustelldienstleistung Zugriff auf das Innere des Behältnisses 1 erlaubt, sofern bestimmt wird, dass das Behältnis 1 leer ist, kann ebenso differenziert für den Online-Modus und den Offline-Modus für die Autorisierungsschlüssel-Zufuhreinrichtung verfügbar gemacht werden, wie dies in Abschnitt B von Figur 4 gezeigt ist. Die Behältnisse 1, für die der Online-Modus vorgegeben ist, können mit dem Generalautorisierungsschlüssel geöffnet werden, der auf Anfrage von dem ortsfernen Rechnersystem 8 zu der Autorisierungsschlüssel-Zufuhreinrichtung 7 zugeführt wird. Diejenigen Generalautorisierungsschlüssel, die für Behältnisse 1 verwendet werden sollen, denen der Offline-Modus zugeordnet ist, werden im Voraus in der Speichereinrichtung der Autorisierungsschlüssel-Zufuhreinrichtung 7 gespeichert.

Ein Einmalautorisierungsschlüssel wird, wie vorstehend beschrieben und in Abschnitt C in Figur 4 dargestellt ist, vom Besitzer des Behältnisses 1 vorgegeben und dem Anbieter der Zustelldienstleistung zugeführt. Auch in diesem Fall kann die Differenzierung zwischen Online-Modus und Offline-Modus auf gleichem Wege erfolgen, sodass nur diejenigen Einmalautorisierungsschlüssel, die Behältnissen 1 zugordnet sind, für die der Offline-Modus vorgegeben ist, im Voraus gespeichert, wohingegen diejenigen Einmalautorisierungsschlüssel, die Behältnissen 1 zugordnet sind, für die der Online-Modus vorgegeben ist, auf Anfrage zu der Autorisierungsschlüssel-Zufuhreinrichtung zugeführt werden.

Insgesamt wird somit ein System zur Verfügung gestellt, bei dem die Sicherheit bei verfügbarem Online-Modus maximiert ist, da ein Autorisierungsschlüssel in diesem Fall nicht auf der Autorisierungsschlüssel-Zufuhreinrichtung 7 gespeichert ist. Somit hätte ein Verlust der Autorisierungsschlüssel-Zufuhreinrichtung 7 nicht zur Folge, dass nichtautorisierten Personen Zugriff auf das Innere des Behältnisses 1 gewährt wird. Um eine flächendeckende Nutzbarkeit des Systems zu gewährleisten, wird ferner ermöglicht, nur für diejenigen Behältnisse 1 bei denen nur ein Offline-Modus vorgegeben ist, Autorisierungsschlüssel im Voraus abzulegen. Somit wird insgesamt eine flächendeckende Nutzbarkeit mit differenzierter und optimierter Sicherheitscharakteristik zur Verfügung gestellt.

Nachfolgend wird der Ablauf der Nutzung des Zugriffssicherungssystems gemäß dem Ausführungsbeispiel in Figur 5 beschrieben. Genauer gesagt wird der Autorisierungsablauf an einem ortsgebundenen Behältnis 1 beschrieben.

Die Autorisierung kann durch einen Mitarbeiter des Zustelldienstes oder durch Dritte erfolgen. Die in Figur 4 gezeigten Schritte S1 bis S5 zeigen dabei den Autorisierungsablauf, wie er erfolgt, wenn der Mitarbeiter das Behältnis unter Verwendung der Autorisierungsschlüssel-Zufuhreinrichtung öffnen will, und Schritt S6 zeigt eine Autorisierung durch Dritte an dem Behältnis 1.

Gelangt der Mitarbeiter auf seiner vorgegebenen Tour zu einem Behältnis, so liest dieser zunächst das Behältnismerkmal in die Autorisierungsschlüssel-Zufuhreinrichtung ein. Gemäß Schritt S1 wird dazu das Behältnismerkmal, beispielsweise ein Barcode, mit der Autorisierungsschlüssel-Zufuhreinrichtung 7 gescannt.

In der Autorisierungsschlüssel-Zufuhreinrichtung 7 wird dann in Schritt S2 überprüft, ob für das Behältnis 1 ein Einmalautorisierungsschlüssel in der Autorisierungsschlüssel-Zufuhreinrichtung 7 gespeichert ist. Ist dies der Fall, so übermittelt die Autorisierungsschlüssel-Zufuhreinrichtung 7 den gespeicherten Einmalautorisierungsschlüssel an das Behältnis 1 bzw. an das in dem Behältnis 1 befindliche Sicherungsmodul 2. Bei Übereinstimmung des übermittelten Einmalautorisierungsschlüssels mit dem hinterlegten Einmalautorisierungsschlüssel wird die Tür des Behältnisses entriegelt.

Wird in Schritt S2 jedoch ermittelt, dass in der Autorisierungsschlüssel-Zufuhreinrichtung kein Einmalautorisierungsschlüssel für das Behältnis 1 gespeichert ist, so wird in einem nachfolgenden Schritt S3 geprüft, ob ein Autorisierungsschlüssel für das Behältnis in der Autorisierungsschlüssel-Zufuhreinrichtung 7 gespeichert ist. Ist ein solcher Autorisierungsschlüssel hinterlegt, so wird dieser an das Sicherungsmodul 2 übermittelt und bei Übereinstimmung des übermittelten Autorisierungsschlüssels mit dem ermittelten Autorisierungsschlüssels für dieses Behältnis 1 wird die Tür des Behältnisses entriegelt. Im Rahmen von Schritt S2 wird somit geprüft, ob ein Autorisierungsschlüssel bereits in der Autorisierungsschlüssel-Zufuhreinrichtung gespeichert ist, also Offline verfügbar ist.

Wird allerdings in Schritt S3 festgestellt, dass kein Autorisierungsschlüssel für das Behältnis gespeichert ist, so wird in einem nachfolgenden Schritt S4 über Online-Zugriff auf das ortsferne Rechnersystem ein Autorisierungsschlüssel angefordert, welcher nach Erhalt an das Sicherungsmodul 2 übermittelt wird. Stimmt der übermittelte Autorisierungsschlüssel mit dem ermittelten Autorisierungsschlüssels für dieses Behältnis 1 überein, so wird die Tür des Behältnisses entriegelt. Kann jedoch kein Autorisierungsschlüssel von dem ortsfernen Rechnersystem erhalten werden, so geht der Ablauf weiter zu Schritt S5.

In Schritt S5 wird der in der Autorisierungsschlüssel-Zufuhreinrichtung 7 gespeicherte Generalautorisierungsschlüssel an den Behälter 1 bzw. dessen Sicherungsmodul 2 übermittelt. Bei Übereinstimmung des im Behältnis hinterlegten Generalsicherheitsschlüssels mit dem übermittelten Generalautorisierungschlüssel wird die Tür des Behälters 1 entriegelt. Allerdings geschieht dies nur, sofern das Behältnis leer ist.

Nach erfolgreichem Öffnen des Behälters hinterlegt der Mitarbeiter nun das zuzustellende Gut und verschließt den Behälter anschließend wieder. Das Behältnis 1 kann nun durch Dritte mit einem passenden Dauerautorisierungsschlüssel für dieses Behältnis 1 geöffnet und dessen Inhalt entnommen werden.

Gemäß einer nicht beanspruchten Modifikation des vorstehend beschriebenen Ausführungsbeispiels kann die Autorisierungsschlüssel-Zufuhreinrichtung so ausgestaltet sein, dass sie ein Sicherheitsmerkmal für zumindest einen der Autorisierungsschlüssel vorgeben kann. Das Autorisierungsmodul kann dann entsprechend eingerichtet sein, um vorgegebene Sicherheitsschlüssel mit zugeführten Autorisierungsschlüsseln zu vergleichen und das gegebenenfalls vorgegebene Sicherheitsmerkmal in den zugeführten Autorisierungsschlüsseln bei Zufuhr zu dem Autorisierungsmodul zu erkennen. Wird ein Sicherheitsmerkmal erkannt, so kann der zugeführte Autorisierungsschlüssel als der aktuell gültige Autorisierungsschlüssel gesetzt werden und die Erzeugung des Signals zum Entsperren der Sperreinrichtung nur bei Zufuhr des aktuell gültigen Autorisierungsschlüssels zu dem Autorisierungsmodul unter der Voraussetzung der vom Autorisierungsmodul festgestellten Übereinstimmung mit dem vorgegebenen Sicherheitsschlüssel gestattet werden.

Das Autorisierungsmodul kann die Erzeugung des Signals zum Entsperren der Sperreinrichtung bei Zufuhr von Autorisierungsschlüsseln zu dem Autorisierungsmodul, die nicht dem aktuell gültigen Autorisierungsschlüssel entsprechen, erst nach zumindest einmaliger Zufuhr des aktuell gültigen Autorisierungsschlüssels nach der Erkennung des Sicherheitsmerkmals gestatten.

Zudem kann das Autorisierungsmodul bei Erkennung, dass das Sicherheitsmerkmal in einem zugeführten Autorisierungsschlüssel nicht vorhanden ist, diesen als allgemeinen Autorisierungsschlüssel setzen und kann die Erzeugung des Signals zum Entsperren der Sperreinrichtung bei nachfolgender Zufuhr von abweichenden Autorisierungsschlüsseln unter der Voraussetzung der vom Autorisierungsmodul festgestellten Übereinstimmung mit dem vorgegebenen Sicherheitsschlüssel gestatten.

Mit der vorstehend beschriebenen Modifikation ist es möglich, das Zugriffssicherungssystem auch ohne selektive Zuordnung von Online-Modus und Offline-Modus auf sichere Weise zu betreiben, was jedoch nicht unter die vorliegende Erfindung fällt.

### BEZUGSZEICHENLISTE

- 1: Behältnis
- 1a: Identifikationsmerkmal
- 2: Sicherungsmodul
- 3: Sperreinrichtung
- 4: Tür
- 5: Tastaturfeld
- 5a: Anzeige
- 6: Kommunikationsmodul
- 7: Autorisierungsschlüssel-Zufuhreinrichtung
- 7a: Anzeige
- 8: Rechnersystem

## Patentansprüche

1. Zugriffssicherungssystem mit folgenden Elementen:
- einer Vielzahl ortsgebundener Behältnisse (1), von denen jedes eine Sperreinrichtung (3) aufweist, die selektiv zum Ermöglichen des Zugriffs auf einen Innenraum des jeweiligen Behältnisses (1) entsperrbar ist, und wobei jedem der ortsgebundenen Behältnisse (1) ein Behältnis-Identifikationsmerkmal (1a) zugeordnet ist;
- einem ortsgebundenen Sicherungsmodul (2) innerhalb eines jeden Behältnisses (1), das einen Sicherheitsschlüssel-Generator und ein Autorisierungsmodul aufweist;
- einer mobilen Autorisierungsschlüssel-Zufuhreinrichtung (7) mit einer Speichereinrichtung und einem Kommunikationsmodul (6) zum Zuführen eines Autorisierungsschlüssels zu dem Autorisierungsmodul;
- wobei jedes Autorisierungsmodul eingerichtet ist, um den von dem Sicherheitsschlüssel-Generator erzeugten Sicherheitsschlüssel mit dem von der Autorisierungsschlüssel-Zufuhreinrichtung (7) zugeführten Autorisierungsschlüssel zu vergleichen und bei Übereinstimmung derselben ein Signal zum Entsperren der Sperreinrichtung (3) zu erzeugen,
- ferner mit einem ortsfernen Rechnersystem (8), das mit einem Autorisierungsschlüssel-Generator ausgestattet ist und mit der Autorisierungsschlüssel-Zufuhreinrichtung (7) zumindest zur Übertragung von Autorisierungsschlüsseln zu der Autorisierungsschlüssel-Zufuhreinrichtung (7) kommunikationsfähig ist,
- wobei die Autorisierungsschlüssel-Zufuhreinrichtung (7) selektiv in einem Online-Modus, in welchem die Kommunikation zwischen Autorisierungsschlüssel-Zufuhreinrichtung (7) und dem ortsfernen Rechnersystem (8) als sichergestellt angenommen wird, und einem Offline-Modus, in welchem die Kommunikation zwischen der Autorisierungsschlüssel-Zufuhreinrichtung (7) und dem ortsfernen Rechnersystem (8) nicht sichergestellt ist, betreibbar ist, wobei mit jedem Behältnis-Identifikationsmerkmal (1a) ein Kommunikationsmerkmal verknüpft ist, das selektiv den Online-Modus oder den Offline-Modus für das dem Behältnis-Identifikationsmerkmal (1a) entsprechende ortsfeste Behältnis (1) vorgibt , und wobei das Zugriffssicherungssystem dazu eingerichtet ist, den Offline-Modus bzw. den Online-Modus durch Bestimmung der Qualität der Kommunikation zwischen Autorisierungsschlüssel-Zufuhreinrichtung (7) und ortsfernen Rechnersystem (8) im Voraus vorzugeben, wobei diejenigen Autorisierungsschlüssel, die mit einem Behältnis-Identifikationsmerkma (1a) verknüpft sind, das als Kommunikationsmerkmal den Offline-Modus vorgibt, im Voraus in der Speichereinrichtung der Autorisierungsschlüssel-Zufuhreinrichtung (7) abgelegt werden und bei Eingabe des Behältnis-Identifikationsmerkmals (1a) aus der Speichereinrichtung der Autorisierungsschlüssel-Zufuhreinrichtung (7) abrufbar sind.

2. Zugriffssicherungssystem nach Anspruch 1, wobei diejenigen Autorisierungsschlüssel, die mit einem Behältnis-Identifikationsmerkmal (1a) verknüpft sind, das als Kommunikationsmerkmal den Online-Modus vorgibt, bei Eingabe des Behältnis-Identifikationsmerkmals (1a) von dem ortsfernen Rechnersystem (8) zu der Autorisierungsschlüssel-Zufuhreinrichtung (7) übertragen werden.

3. Zugriffssicherungssystem einem der vorhergehenden Ansprüche, wobei für den Sicherheitsschlüssel-Generator ein Einmalschlüssel vorgebbar ist, wobei das Autorisierungsmodul eingerichtet ist, um den vorgegebenen Einmalschlüssel mit einem zugeführten Einmalautorisierungsschlüssel zu vergleichen und bei Übereinstimmung derselben ein Signal zum Entsperren der Sperreinrichtung zu erzeugen.

4. Zugriffssicherungssystem nach Anspruch 3, wobei die Sperreinrichtung (4) erst nach Entsperren auf die Eingabe des mit dem Einmalschlüssel übereinstimmenden Einmalautorisierungsschlüssels entsperrbar ist.

5. Zugriffssicherungssystem nach einem der vorhergehenden Ansprüche, wobei für den Sicherheitsschlüssel-Generator ein Dauerschlüssel vorgebbar ist, wobei das Autorisierungsmodul eingerichtet ist, um den vorgegebenen Dauerschlüssel mit einem zugeführten Dauerautorisierungsschlüssel zu vergleichen, wobei bei Übereinstimmung derselben und bei Bestimmung durch das Autorisierungsmodul, dass die Sperreinrichtung nicht durch einen Einmalautorisierungsschlüssel gesperrt ist, ein Signal zum Entsperren der Sperreinrichtung zu erzeugen.

6. Zugriffssicherungssystem nach einem der vorhergehenden Ansprüche, ferner mit einem Modul zum Bestimmen des Beladungszustands des Behältnisses, wobei das Autorisierungsmodul eingerichtet ist, um einen vorgebbaren Generalautorisierungsschlüssel mit einem dem Autorisierungsmodul zugeführten Generalsicherheitsschlüssel zu vergleichen und bei Übereinstimmung derselben ein Signal zum Entsperren der Sperreinrichtung zu erzeugen, wenn das Modul zum Bestimmen des Beladungszustands bestimmt, dass das Behältnis nicht beladen ist.

7. Zugriffssicherungssystem nach einem der vorhergehenden Ansprüche, wobei zumindest der Autorisierungsschlüssel und der Sicherheitsschlüssel zeitbasiert erzeugt werden.

8. Zugriffssicherungssystem nach einem der vorhergehenden Ansprüche, wobei die Eingaben in das Zugriffssicherungssystem in einer Vorgangsspeichereinrichtung abrufbar abgelegt werden, wobei die Vorgangsspeichereinrichtung vorzugsweise innerhalb des Behältnisses (1) angeordnet ist.

9. Zugriffssicherungssystem nach einem der vorhergehenden Ansprüche, wobei die Bestimmung der Qualität der Kommunikation zwischen Autorisierungsschlüssel-Zufuhreinrichtung und ortsfernem Rechnersystem eine vorbestimmte Zeit vor der Benutzung erfolgt.

10. Zugriffssicherungssystem nach Anspruch 9, ferner mit einem Adaptionsmodul zum Erstellen, Speichern und Aktualisieren von Verknüpfungen von Behältnis-Identifikationsmerkmalen (1a) mit einem entsprechenden Kommunikationsmerkmal, wobei die Verknüpfungen durch Bestimmung der Qualität der Kommunikation zwischen Autorisierungsschlüssel-Zufuhreinrichtung und ortsfernem Rechnersystem (8) erstellt und gegebenenfalls aktualisiert werden.

11. Verfahren zum Betrieb eines Zugriffssicherungssystems nach einem der Ansprüche 1-10 mit den folgenden Schritten:
- Bestimmen des Behältnis-Identifikationsmerkmals, das mit einem ortsgebundenen Behältnis (8) verknüpft ist, unter Verwendung der mobilen Autorisierungsschlüssel-Zufuhreinrichtung;
- Abfrage des dem Behältnis-Identifikationsmerkmal (1a) zugeordneten Autorisierungsschlüssels.

12. Verfahren zum Betrieb eines Zugriffssicherungssystems nach Anspruch 11, ferner mit den folgenden Schritten:
- Abfragen des mit dem Behältnis-Identifikationsmerkmal (1a) verknüpften Kommunikationsmerkmals;
- Prüfen der Gültigkeit des bestimmten Kommunikationsmerkmals in der Umgebung des Behältnisses (1) indem geprüft wird, ob das betreffende Behältnis (1) sich in einem Bereich befindet, in welchem die Kommunikation zwischen der Autorisierungsschlüssel-Zufuhreinrichtung und dem ortfernen Rechnersystem (8) sichergestellt ist oder nicht;
- Speicherung oder Übermittlung des Ergebnisses der Prüfung der Gültigkeit des Kommunikationsmerkmals;
- gegebenenfalls Aktualisierung des Kommunikationsmerkmals.

13. Verfahren zum Betrieb eines Zugriffssicherungssystems nach Anspruch 11 oder 12
ferner mit den folgenden Schritten:
- Bestimmen der Vorgabe des Online-Modus oder des Offline-Modus auf Basis des abgefragten Kommunikationsmerkmals;
- Betreiben der Autorisierungsschlüssel-Zufuhreinrichtung (7) im vorgegebenen Modus;
- Abrufen der Autorisierungsschlüssel, die im Voraus in der Speichereinrichtung der Autorisierungsschlüssel-Zufuhreinrichtung gespeichert wurden, wenn der Offline-Modus vorgegeben ist; oder
- Übertragung der Autorisierungsschlüssel von dem ortsfernen Rechnersystem.

14. Verfahren zum Betrieb eines Zugriffssicherungssystems nach einem der Ansprüche 11-13,
ferner mit den folgenden Schritten:
- Eingeben des Behältnis-Identifikationsmerkmal (1a) des Behältnisses;
- Bestimmen, ob ein Einmalautorisierungsschlüssel verfügbar ist;
- Bereitstellen des Einmalautorisierungsschlüssels an der Autorisierungsschlüssel-Zufuhreinrichtung (7);
- Eingeben des bereitgestellten Einmalautorisierungsschlüssels in das Autorisierungsmodul;
- Bestimmen der Übereinstimmung des eingegebenen Einmalautorisierungsschlüssels und des von dem Sicherheitsschlüssel-Generator vorgegebenen Einmalschlüssels;
- Entsperren der Sperreinrichtung bei Übereinstimmung des eingegebenen Einmalautorisierungsschlüssels und des von dem Sicherheitsschlüssel-Generator vorgegebenen Einmalschlüssels;
- Unterbinden einer Entsperrung der Sperreinrichtung durch andere Autorisierungsschlüssel, bis die Sperreinrichtung mit dem eingegebenen Einmalautorisierungsschlüssel entsperrt wurde.

15. Verfahren zum Betrieb eines Zugriffssicherungssystems nach einem der Ansprüche 11-14, ferner mit den folgenden Schritten:
- Eingeben eines Dauerautorisierungsschlüssels in das Autorisierungsmodul;
- Bestimmen der Übereinstimmung des eingegebenen Dauerautorisierungsschlüssels und des von dem Sicherheitsschlüssel-Generator vorgegebenen Dauerschlüssels;
- Bestimmen, ob die Sperreinrichtung (2) durch einen Einmalautorisierungsschlüssel gesperrt ist;
- Entsperren der Sperreinrichtung (3) bei Übereinstimmung des eingegebenen Dauerautorisierungsschlüssels und des von dem Sicherheitsschlüssel-Generator vorgegebenen Dauerschlüssels;
- Unterbinden einer Entsperrung der Sperreinrichtung (3) bei Bestimmung, dass die Sperreinrichtung durch einen Einmalautorisierungsschlüssel gesperrt ist.

16. Verfahren zum Betrieb eines Zugriffssicherungssystems nach einem der Ansprüche 11-15, ferner mit den folgenden Schritten:
- Eingeben eines Generalautorisierungsschlüssels in das Autorisierungsmodul;
- Bestimmen der Übereinstimmung des eingegebenen Generalautorisierungsschlüssels und des von dem Sicherheitsschlüssel-Generator vorgegebenen Generalschlüssels;
- Bestimmen des Beladungszustands des Behältnisses;
- Entsperren der Sperreinrichtung (3) bei Übereinstimmung des eingegebenen Generalautorisierungsschlüssels und des von dem Sicherheitsschlüssel-Generator vorgegebenen Generalschlüssels;
- Unterbinden einer Entsperrung der Sperreinrichtung (3) bei Bestimmung, dass das Behältnis beladen ist.

17. Verfahren zum Betrieb eines Zugriffssicherungssystems nach Anspruch 16, ferner mit
dem Schritt:
- Bestimmen, ob die Sperreinrichtung (3) durch einen Einmalautorisierungsschlüssel gesperrt ist;
- Unterbinden einer Entsperrung der Sperreinrichtung bei Bestimmung, dass die Sperreinrichtung (3) durch einen Einmalautorisierungsschlüssel gesperrt ist.

18. Verfahren zum Betrieb eines Zugriffssicherungssystems nach einem der Ansprüche 11-17, ferner mit den folgenden Schritten:
- Vorbestimmung eines Nutzungsprofils des Zugriffssicherungssystems, wobei das Nutzungsprofil die Nutzung einer Anzahl von Behältnissen (1) mit entsprechend verknüpften Kommunikationsmerkmalen in einem vorgegebenen Zeitraum mit einer zugeordneten Autorisierungsschlüssel-Zufuhreinrichtung umfasst;
- wobei für die Nutzung mit dem vorbestimmten Nutzungsprofil ein Datenabgleich für die zugeordnete Autorisierungsschlüssel-Zufuhreinrichtung (7) vorgenommen wird, der zumindest Folgendes umfasst:
- Ermitteln eines Satzes Kommunikationsmerkmale, die den Offline-Modus vorgeben, von Behältnissen, die in dem vorgegebenen Zeitraum des Nutzungsprofils nutzbar sein sollen;
- Abrufen derjenigen Autorisierungsschlüssel, die mit den Kommunikationsmerkmalen verknüpft sind, die den Offline-Modus vorgeben, vor der Nutzung mit dem vorbestimmten Nutzungsprofil und Speichern der Autorisierungsschlüssel in der Autorisierungsschlüssel-Zufuhreinrichtung;
- Bereitstellung des Autorisierungsschlüssels aus der Speichereinrichtung der Autorisierungsschlüssel-Zufuhreinrichtung (7) durch Eingabe des entsprechenden Behältnis-Identifikationsmerkmals (1a) in die Autorisierungsschlüssel-Zufuhreinrichtung (7).

19. Verfahren zum Betrieb eines Zugriffssicherungssystems nach Anspruch 18, ferner mit
den folgenden Schritten:
- Ermitteln eines Satzes Kommunikationsmerkmale, die den Online-Modus vorgeben, von Behältnissen, die in dem vorgegebenen Zeitraum des Nutzungsprofils nutzbar sein sollen;
- Übertragung derjenigen Autorisierungsschlüssel, die mit den Kommunikationsmerkmalen verknüpft sind, die den Online-Modus vorgeben, nach Eingabe des Behältnis-Identifikationsmerkmals von dem ortsfernen Rechnersystem zu der Autorisierungsschlüssel-Zufuhreinrichtung.

## Claims

1. Access security system with the following elements:
- Multiple stationary containers (1), each of which comprises a locking device (3), which is unlockable to selectively enable access to an interior space of said container, and wherein each of the stationary containers (1) has been assigned a container identification feature (1a);
- a stationary security module (2) inside each container, which comprises a security key generator and an authorisation module;
- a mobile authorisation key supply unit (7) with a storage device and a communication module (6) to supply an authorisation key to the authorisation module;
- wherein each authorisation module is arranged to compare the security key produced by the security key generator with the supplied authorisation key from the authorisation key supply unit (7) and in the case of matching each other, to produce a signal to unlock the locking device (3),
- furthermore, with a remote computing system (8), which is equipped with an authorisation key generator and is capable of communicating with the authorisation key supply unit (7) at least for the transfer of authorisation keys to the authorisation key supply unit,
- wherein the authorisation key supply unit (7) is selectively operable in an online mode, in which the communication between the authorisation key supply unit (7) and the remote computing system (8) is presumed to be secured, and in an offline mode, in which the communication between the authorisation key supply unit (7) and the remote computing system is not secured,
wherein each container identification feature (1a) is linked to a communication feature that indicates either the online or offline mode for the container identification feature (1a) corresponding to the stationary container (1),
and wherein the access security system is arranged so that the offline or online mode is indicated in advance through determining the quality of the communication between the authorisation key supply unit (7) and the remote computing system (8),
wherein those authorisation keys that are linked to a container identification feature (1a) indicating the offline mode as a communication feature will be filed in advance to the storage device of the authorisation key supply unit (7) and upon entering the container identification feature (1a) are retrievable from the storage device of the authorisation key supply unit (7).

2. Access security system according to claim 1, wherein those authorisation keys that are linked to a container identification feature (1a) indicating the online mode as a communication feature are transferred from the remote computing system (8) to the authorisation key supply unit (7) upon entering the container identification feature (1a).

3. Access security system according to any of the previous claims, wherein a one-time key can be provided for the security key generator, wherein the authorisation module is arranged to compare the provided one-time key with a supplied one-time authorisation key and when matching each other, to generate a signal to unlock the locking device.

4. Access security system according to claim 3, wherein the locking device (4) can be unlocked only after unlocking due to the input of the one-time key matching the one-time authorisation key.

5. Access security system according to any of the previous claims, wherein a permanent key can be provided for the security key generator, wherein the authorisation module is arranged to compare the provided permanent key with a supplied permanent authorisation key, wherein when matching each other and by determination through the authorisation module that the locking device is not locked by means of a one-time authorisation key, that a signal is generated to unlock the locking device.

6. Access security system according to any of the previous claims, further with a module to determine the load status of the container, wherein the authorisation module is arranged to compare a provided general authorisation key with a general security key supplied to the authorisation module and when in agreement with each other, to generate a signal to unlock the locking device, when the module for measuring the load status determines that the container is not loaded.

7. Access security system according to any of the previous claims, wherein at least the authorisation key and the security key are generated on a basis of time.

8. Access security system according to any of the previous claims, wherein the input into the access security device is filed in a callable manner in an operational storage device, wherein the operational storage device is preferably arranged inside the container (1).

9. Access security system according to any one of the previous claims, wherein the determination of the quality of the communication between the authorisation key supply unit and the remote computing system occurs at a predetermined time.

10. Access security system according to claim 9, further with an adaptation module to establish, save, and update links of container identification features (1a) with a corresponding communication feature, wherein the link is established and, if applicable, updated through the determination of the quality of the communication between the authorisation key supply unit and the remote computing system (8).

11. Method to operate an access security system according to one of the claims 1-10 with the following steps:
- Determining the container identification feature that is linked to a stationary container (8) applying the mobile authorisation key supply unit;
- Inquiry of the authorisation key assigned to the container identification feature (1a)

12. Method to operate an access security system according to claim 11, further with the following steps:
- Inquiry of the communication feature linked to the container identification feature (1a);
- Checking the validity of the determined communication feature in the surroundings of the container (1), by checking whether the respective container (1) is located in an area, where the communication between the authorisation key supply unit and the remote computing system (8) is secured or not;
- Storing or transmitting the result of the checking of the validity of the communication feature;
- Updating, if applicable, the communication feature.

13. Method to operate an access security system according to claims 11 or 12, further with the following steps:
- Determining the indication of online mode or offline mode on the basis of the inquired communication feature;
- Operating the authorisation key supply unit (7) in the indicated mode;
- Calling the authorisation key, which is stored in advance in the storage device of the authorisation key supply unit when the offline mode is indicated; or
- Transferring the authorisation key from the remote computing system.

14. Method to operate an access security system according to one of the claims 11-13, further with the following steps:
- Input of the container identification feature (1a) of the container;
- Determining whether a one-time authorisation key is available;
- Providing the one-time authorisation key to the authorisation key supply unit (7);
- Input of the provided one-time authorisation key into the authorisation module;
- Determining the matching between the input one-time authorisation key and the one-time key from the security key generator;
- Unlocking the locking device in the case of matching between the input one-time authorisation key and the one-time key provided by the security key generator;
- Disabling an unlocking of the locking device through another authorisation key until the locking device is unlocked by the input one-time authorisation key.

15. Method to operate an access security system according to one of the claims 11-14, further with the following steps:
- Input of a permanent authorisation key into the authorisation module;
- Determining the matching between the input permanent authorisation key and the permanent key provided by the security key generator;
- Determining whether the locking device (2) is locked through a one-time authorisation key;
- Unlocking the locking device (3) in the case of matching between the input permanent authorisation key and the permanent key provided by the security key generator;
- Disabling an unlocking of the locking device (3) in the case of determining that the locking device is locked by a one-time authorisation key.

16. Method to operate an access security system according to one of the claims 11-15, further with the following steps:
- Input of a general authorisation key into the authorisation module;
- Determining the matching between the input general authorisation key and the general key provided by the security key generator;
- Determining the load status of the container;
- Unlocking the locking device (3) in the case of matching between the input general authorisation key and general key provided by the security key generator;
- Disabling an unlocking of the locking device (3) in the case of determining that the container is loaded.

17. Method to operate an access security system according to claim 16, further with the steps:
- Determining whether the locking device (3) is locked through a one-time authorisation key;
- Disabling an unlocking of the locking device in the case of determining that the locking device (3) is locked by a one-time authorisation key.

18. Method to operate an access security system, according to one of the claims 11-17, further with the following steps:
- Predetermining a user profile of the access security system, wherein the user profile includes the use of a number of containers (1) with correspondingly linked communication features with an assigned authorisation key supply unit in an indicated timespan;
- wherein for the use of a predetermined user profile, a data reconciliation will be performed for the assigned authorisation key supply unit, including at least:
- Investigating a set of communication features that indicate the offline mode from containers that should be usable within a predetermined timespan of the user profile;
- Calling those authorisation keys, which are linked with communication features that are indicated as being in offline mode, before use with the predetermined user profile and saving the authorisation key in the authorisation key supply unit;
- Providing the authorisation key from the storage device of the authorisation key supply unit (7) through the input of the corresponding container identification feature (1a) in the authorisation key supply unit (7).

19. Method to operate an access security system according to claim 18, further with the following steps:
- Investigating a set of communication features of containers that are indicated to be in the online mode, which should be usable in the predetermined timespan of the user profile.
- Transfer of the authorisation key, which is linked to the communication features that are indicated to be in the online mode, after the input of the container identification features from the remote computing system to the authorisation key supply unit.

## Revendications

1. Système de sécurité d'accès comprenant les éléments suivants :
- un grand nombre de récipients fixes (1) qui comportent chacun un dispositif de verrouillage (3) qui peut être sélectivement déverrouillé pour permettre l'accès à un espace intérieur du récipient respectif (1), et chacun des récipients fixes (1) étant associé à une caractéristique d'identification de récipient (1a) ;
- un module de sécurité fixe (2) qui est situé à l'intérieur de chaque récipient (1) et qui comporte un générateur de clé de sécurité et un module d'autorisation ;
- un dispositif de fourniture de clé d'autorisation mobile (7) qui comprend un dispositif de mémorisation et un module de communication (6) et qui est destiné à fournir une clé d'autorisation au module d'autorisation ;
- chaque module d'autorisation étant conçu pour comparer la clé de sécurité générée par le générateur de clé de sécurité à la clé d'autorisation fournie par le dispositif de fourniture de clé d'autorisation (7) et pour générer, en cas de coïncidence de celles-ci, un signal de déverrouillage du dispositif de verrouillage (3),
- en outre un système informatique distant (8) qui est équipé d'un générateur de clé d'autorisation et qui est apte à communiquer avec le dispositif de fourniture de clé d'autorisation (7) au moins pour transmettre des clés d'autorisation au dispositif de fourniture de clé d'autorisation (7),
- le dispositif de fourniture de clé d'autorisation (7) pouvant fonctionner sélectivement dans un mode en ligne, dans lequel la communication entre le dispositif de fourniture de clé d'autorisation (7) et le système informatique distant (8) est supposée être assurée, et dans un mode hors ligne dans lequel la communication entre le dispositif de fourniture de clé d'autorisation (7) et le système informatique distant (8) n'est pas assurée, chaque caractéristique d'identification de récipient (1a) étant combinée à une caractéristique de communication qui spécifie sélectivement le mode en ligne ou le mode hors ligne pour le récipient fixe (1) correspondant à la caractéristique d'identification de récipient (1a), et le système de sécurité d'accès étant conçu pour spécifier à l'avance le mode hors ligne ou le mode en ligne en déterminant la qualité de la communication entre le dispositif de fourniture de clé d'autorisation (7) et le système informatique distant (8),
les clés d'autorisation, qui sont combinées à une caractéristique d'identification de récipient (1a) qui spécifie le mode hors ligne comme caractéristique de communication, étant stockées à l'avance dans le dispositif de mémorisation du dispositif de fourniture de clé d'autorisation (7) et pouvant être extraites du dispositif de mémorisation du dispositif d'alimentation de clé d'autorisation (7) lorsque la caractéristique d'identification de récipient (1a) est saisie.

2. Système de sécurité d'accès selon la revendication 1, les clés d'autorisation, qui sont combinées à une caractéristique d'identification de récipient (1a) qui spécifie le mode en ligne comme caractéristique de communication, étant transmises du système informatique distant (8) au dispositif de fourniture de clé d'autorisation (7) lorsque la caractéristique d'identification de récipient (1a) est saisie.

3. Système de sécurité d'accès selon l'une des revendications précédentes, une clé unique pouvant être spécifiée pour le générateur de clé de sécurité, le module d'autorisation étant conçu pour comparer la clé unique spécifiée à une clé d'autorisation unique fournie et pour générer, si elles coïncident, un signal de déverrouillage du dispositif de verrouillage.

4. Système de sécurité d'accès selon la revendication 3, le dispositif de verrouillage (4) ne pouvant être déverrouillé qu'après le déverrouillage sur saisie de la clé d'autorisation unique coïncidant à la clé unique.

5. Système de sécurité d'accès selon l'une des revendications précédentes, une clé permanente pouvant être spécifiée pour le générateur de clé de sécurité, le module d'autorisation étant conçu pour comparer la clé permanente spécifiée à une clé d'autorisation permanente fournie et pour générer un signal de déverrouillage du dispositif de verrouillage en cas de coïncidence et en cas de détermination par le module d'autorisation que le dispositif de verrouillage n'est pas verrouillé par une clé d'autorisation unique.

6. Système de sécurité d'accès selon l'une des revendications précédentes, ledit système comprenant en outre un module de détermination de l'état de chargement du récipient,
le module d'autorisation étant conçu pour comparer une clé d'autorisation générale spécifiable à une clé de sécurité générale fournie au module d'autorisation et pour générer, en cas de coïncidence, un signal de déverrouillage du dispositif de verrouillage lorsque le module de détermination de l'état de chargement détermine que le récipient n'est pas chargé.

7. Système de sécurité d'accès selon l'une des revendications précédentes, au moins la clé d'autorisation et la clé de sécurité étant générées en fonction du temps.

8. Système de sécurité d'accès selon l'une des revendications précédentes, les saisies effectuées dans le système de sécurité d'accès pouvant être stockées dans un dispositif de mémorisation de processus de manière à pouvoir être extraites, le dispositif de mémorisation de processus étant de préférence disposé à l'intérieur du récipient (1).

9. Système de sécurité d'accès selon l'une des revendications précédentes, la qualité de la communication entre le dispositif de fourniture de clé d'autorisation et le système informatique distant étant déterminée à un instant prédéterminé avant utilisation.

10. Système de sécurité d'accès selon la revendication 9, ledit système comprenant en outre un module d'adaptation destiné à créer, mémoriser et actualiser des combinaisons de caractéristiques d'identification de récipient (1a) à une caractéristique de communication correspondante, les combinaisons étant créées par détermination de la qualité de la communication entre le dispositif de fourniture de clé d'autorisation et le système informatique distant (8) et étant actualisées si nécessaire.

11. Procédé de fonctionnement d'un système de sécurité d'accès selon l'une des revendications 1 à 10, ledit procédé comprenant les étapes suivantes :
- déterminer la caractéristique d'identification de récipient qui est combinée à un récipient fixe (8) à l'aide du dispositif de fourniture de clé d'autorisation mobile ;
- extraire la clé d'autorisation associée à la caractéristique d'identification de récipient (1a).

12. Procédé de fonctionnement d'un système de sécurité d'accès selon la revendication 11, ledit procédé comprenant en outre les étapes suivantes :
- extraire la caractéristique de communication combinée à la caractéristique d'identification de récipient (1a) ;
- vérifier la validité de la caractéristique de communication déterminée dans l'environnement du récipient (1) par vérification que le récipient (1) en question est situé dans une zone dans laquelle la communication entre le dispositif de fourniture de clé d'autorisation et le système informatique distant (8) est assuré ou non ;
- mémoriser ou transmettre le résultat de la vérification de validité de la caractéristique de communication ;
- si nécessaire, actualiser la caractéristique de communication.

13. Procédé de fonctionnement d'un système de sécurité d'accès selon la revendication 11 ou 12, ledit procédé comprenant en outre les étapes suivantes :
- déterminer la spécification du mode en ligne ou du mode hors ligne sur la base de la caractéristique de communication extraite ;
- faire fonctionner le dispositif de fourniture de clé d'autorisation (7) dans le mode spécifié ;
- extraire les clés d'autorisation qui ont été préalablement mémorisées dans le dispositif de mémorisation du dispositif de fourniture de clé d'autorisation lorsque le mode hors ligne est spécifié ; ou
- transmettre la clé d'autorisation depuis le système informatique distant.

14. Procédé de fonctionnement d'un système de sécurité d'accès selon l'une des revendications 11 à 13, ledit procédé comprenant en outre les étapes suivantes :
- saisir la caractéristique d'identification de récipient (1a) du récipient ;
- déterminer si une clé d'autorisation unique est disponible ;
- fournir la clé d'autorisation à usage unique au dispositif de fourniture de clé d'autorisation (7) ;
- saisir la clé d'autorisation unique fournie dans le module d'autorisation ;
- déterminer la coïncidence entre la clé d'autorisation unique saisie et la clé unique spécifiée par le générateur de clé de sécurité ;
- déverrouiller le dispositif de verrouillage en cas de coïncidence de la clé d'autorisation unique saisie et de la clé unique spécifiée par le générateur de clé de sécurité;
- empêcher un déverrouillage du dispositif de verrouillage par une autre clé d'autorisation jusqu'à ce que le dispositif de verrouillage ait été déverrouillé avec la clé d'autorisation unique saisie.

15. Procédé de fonctionnement d'un système de sécurité d'accès selon l'une des revendications 11 à 14, ledit procédé comprenant en outre les étapes suivantes :
- saisir une clé d'autorisation permanente dans le module d'autorisation ;
- déterminer la coïncidence de la clé d'autorisation permanente saisie et de la clé permanente spécifiée par le générateur de clé de sécurité ;
- déterminer si le dispositif de verrouillage (2) est verrouillé par une clé d'autorisation unique ;
- déverrouiller le dispositif de verrouillage (3) en cas de coïncidence de la clé d'autorisation permanente saisie et de la clé permanente spécifiée par le générateur de clé de sécurité ;
- empêcher le déverrouillage du dispositif de verrouillage (3) en cas de détermination que le dispositif de verrouillage est verrouillé par une clé d'autorisation unique.

16. Procédé de fonctionnement d'un système de sécurité d'accès selon l'une des revendications 11-15, ledit procédé comprenant en outre les étapes suivantes :
- saisir une clé d'autorisation générale dans le module d'autorisation ;
- déterminer la coïncidence de la clé d'autorisation générale saisie et de la clé générale spécifiée par le générateur de clé de sécurité ;
- déterminer l'état de chargement du récipient ;
- déverrouiller le dispositif de verrouillage (3) en cas de coïncidence de la clé d'autorisation générale saisie et de la clé générale spécifiée par le générateur de clé de sécurité ;
- empêcher le déverrouillage du dispositif de verrouillage (3) en cas de détermination que le récipient est chargé.

17. Procédé de fonctionnement d'un système de sécurité d'accès selon la revendication 16, ledit procédé comprenant en outre les étapes suivantes :
- déterminer si le dispositif de verrouillage (3) est verrouillé par une clé d'autorisation unique ;
- empêcher le déverrouillage du dispositif de verrouillage en cas de détermination que le dispositif de verrouillage (3) est verrouillé par une clé d'autorisation unique.

18. Procédé de fonctionnement d'un système de sécurité d'accès selon l'une des revendications 11 à 17, ledit procédé comprenant en outre les étapes suivantes :
- prédéterminer un profil d'utilisation du système de sécurité d'accès, le profil d'utilisation comprenant l'utilisation d'un certain nombre de récipients (1) présentant des caractéristiques de communication combinées de manière appropriée dans un intervalle de temps spécifié avec un dispositif de fourniture de clé d'autorisation associé ;
- une comparaison de données pour le dispositif de fourniture de clé d'autorisation associé (7) étant effectuée pour l'utilisation avec le profil d'utilisation prédéterminé, laquelle comparaison comprenant au moins les étapes suivantes :
- déterminer un ensemble de caractéristiques de communication qui spécifient le mode hors ligne, de récipients qui doivent être utilisables dans l'intervalle de temps spécifié du profil d'utilisation ;
- extraire les clés d'autorisation qui sont combinées aux caractéristiques de communication qui spécifient le mode hors ligne, avant l'utilisation avec le profil d'utilisation prédéterminé et mémoriser la clé d'autorisation dans le dispositif de fourniture de clé d'autorisation ;
- fournir la clé d'autorisation provenant du dispositif de mémorisation du dispositif de fourniture de clé d'autorisation (7) par saisie de la caractéristique d'identification de récipient correspondante (1a) dans le dispositif de fourniture de clé d'autorisation (7).

19. Procédé de fonctionnement d'un système de sécurité d'accès selon la revendication 18, ledit procédé comprenant en outre les étapes suivantes :
- déterminer un ensemble de caractéristiques de communication, qui spécifient le mode en ligne, de récipients qui doivent être utilisables dans l'intervalle de temps spécifié du profil d'utilisation ;
- transmettre les clés d'autorisation, qui sont combinées aux caractéristiques de communication qui spécifient le mode en ligne après la saisie de la caractéristique d'identification de récipient, du système informatique distant au dispositif de fourniture de clés d'autorisation.
